# EUROPEAN PATENT APPLICATION

(11) **EP 3 845 304 A1**
(43) Date of publication of application: **07.07.2021**
(21) Application number: 19220150.7
(22) Date of filing: 30.12.2019
(51) Int. Cl.: B01J 13/14, A01N 25/28

(54) **CAPSULE SUSPENSION CONCENTRATES BASED ON POLYISOCYANATES AND BIODEGRADABLE AMINE BASED CROSS-LINKER**

(71) Applicant: Bayer AG, 51373 Leverkusen (DE)
(72) Inventor: The designation of the inventor has not yet been filed
(74) Representative: BIP Patents

(57) **Abstract**

The present invention relates to aqueous capsule suspension concentrates based on polyurea shell material containing polyfunctional aminocarboxylic esters, the production thereof and the use thereof as an agrochemical formulation that provide better biodegradability.

## Description

The present invention relates to aqueous capsule suspension concentrates based on polyurea shell material containing polyfunctional aminocarboxylic esters, the production thereof and the use thereof as an agrochemical formulation that provide better biodegradability.

Microcapsules are spherical objects which consist of a core and a wall material surrounding the core, wherein the core in principal can be a solid, liquid or gaseous component which is surrounded by the solid wall material. For many applications the wall is formed by a polymer material. Microcapsules usually have a volume average diameter from 1 to 1000 µm.

A multitude of shell materials is known for producing the wall of microcapsules. The shell can consist either of natural, semisynthetic or synthetic materials. Natural shell materials are, for example, gum arabic, agar agar, agarose, maltodextrins, alginic acid or its salts, e.g. sodium alginate or calcium alginate, fats and fatty acids, cetyl alcohol, collagen, chitosan, lecithins, gelatin, albumin, shellac, polysaccharides, such as starch or dextran, polypeptides, protein hydrolysates, sucrose and waxes. Semisynthetic shell materials are inter alia chemically modified celluloses, in particular cellulose esters and cellulose ethers, e.g. cellulose acetate, ethyl cellulose, hydroxypropylcellulose, hydroxypropylmethylcellulose and carboxymethyl- cellulose, and also starch derivatives, in particular starch ethers and starch esters. Synthetic shell materials are, for example, polymers, such as polyacrylates, polyamides, polyvinyl alcohols, polyvinylpyrrolidones or polyureas.

Depending on the type of shell material and the production process, microcapsules are formed in each case with different properties, such as diameter, size distribution and physical and/or chemical properties.

Polyurea core-shell microcapsules obtained by reaction of at least one diisocyanate and at least one polyamine are well known in the art, for example from WO 2011/161229 or WO 2011/160733. According to WO 201 1/161229 or WO 2011/160733 the polyurea microcapsules are prepared in presence of polyvinylpyrrolidone (PVP) as a protective colloid.

The development of biodegradable microcapsules was carried out mainly for drug transport and in-vivo release applications. Attention toward biodegradable capsules was increased since environmental aspects of polymers started to be discussed in the public and efforts were made to reduce environmental pollution.

The closest prior art are WO2017/089116 and WO2017/089117 using polyestermodified polyisocyanates that are cured with amines. The application gives no further data on biodegradability; however, polyesters are known to undergo hydrolysis after some time in the environment. A disadvantage of the application is that the polyisocyanate must be modified with polyesters. This results very often in more instable capsules due to demixing while curing. Furthermore, if a new polyisocyanate is used in the encapsulation process, a new modified ester is needed, thus adding complexity to the formulator's tool box. Another disadvantage is the viscosity increase of the modified polyisocyante resulting in further mixing and dosing issues during production. Very often, these isocyanates must be heated to provide lower viscosity. However, the stability of isocyanates reduces with increased temperature.

It would be easier for the formulation chemist to use polyamines containing ester groups in the inner backbone containing no free carboxylic acid and minimum two NH2 groups at the chain end. However, this kind of chemistry is known to undergo either polymerization with themselves, cyclization or decomposes as the NH2 group is highly reactive and would react with the ester group. Therefore, only lysine or amino acids as also described in WO2017/089116 and 2017/089117 are known so far to be usefule, while this kind of chemistry would allow novel formulations with biodegradable polymers with improved properties. In the unpublished EP18181480.7 Nouryon found a new process to produce in industrial scale polyamine ester containing such amines as described below by compound IV.

Therefore, the object of the present invention was to provide microcapsules, in particular for encapsulation of active ingredients, with
- With small particle (microcapsule) size and narrow particle size distribution
- With good tightness and mechanical stability of the microcapsules
- Which are sprayable in dispersion
- Which are partially made out of biodegradable building blocks
as well as agrochemical formulations comprising the same.

The above outlined problems are overcome by the capsule suspension concentrates (CS) according to the invention, wherein the capsules are made of Polymers, preferably polyurea, polyurethane or polyamide polymers, containing amine-functional esters of Formula IV as a monomer.

Hence, in general the present invention relates to a polymer comprising as one monomer amine-functional esters of Formula IV, wherein the polymer preferably is for use in agrochemical formulations, wherein the polymer comprises
a) at least one polyisocyante containing at least 2 isocyanate groups, and
b) at least an ester group containing compound of Formula IV and optionally further isocyanate reactive compounds b) different from IV, .

The present invention therefore relates to microcapsules comprising in its polymeric shell a polymer with one monomer being amine-functional esters of Formula IV, wherein the capsule preferably is for use in agrochemical formulations.

The present invention relates to microcapsule comprising a capsule core and a polymeric shell, wherein the shell comprises in polymerized form
a) at least one polyisocyante containing at least 2 isocyanate groups, and
b) at least an ester group containing compound of Formula IV and optionally further isocyanate reactive compounds b) different from IV,
which form the partially biodegradable shell.

The present invention further relates to microcapsule dispersions, comprising microcapsules wherein the capsule core contains essentially a least one component, which can be dissolved in an organic solvent, preferably the one component is an agrochemical active ingredient.

Further, the microcapsule formulation is preferably present as capsule suspension concentrate (CS) in water.

Moreover, the present invention relates to agrochemical formulations comprising the microcapsules with active ingredient in their core, wherein the formulation is preferably an aqueous capsule suspension concentrate.

If not otherwise indicated, in the instant invention the particle size is determined according to CIPAC (CIPAC = Collaborative International Pesticides Analytical Council; www.cipac.org) Method MT 187 as d50 or d90 = active ingredient particle size (laser scattering of 50% or 90% of all volume particles). The median particle size refers to the d50 value.

The particles (microcapsules) of the CS have a median particle size d50 which is generally between 1 and 50 µm, preferably 1 to 20 µm, most preferably between 3 and 15 µm.

The present invention further relates to a microcapsule obtained by the processes according to the invention.

The present invention further relates to the use of microcapsules according to the invention or obtained by the processes according to the invention in a personal care composition, or a home care composition, or a composition used for industrial or institutional or hospital applications, or a material protection composition, or a pharmaceutical composition, or a plant protection composition.

The present invention further relates to the use of the microcapsules according to the invention or obtained by the processes according to the invention in a cosmetic composition, a hygiene composition, a composition for industrial or institutional or hospital cleaning or disinfection, laundry detergents, fabric softeners, dishwashing liquids, household cleaners, industrial cleaners, oil recovery, adhesives, coatings, or constructions, or agro formulations.

Therefore, in one embodiment the instant invention relates to a microcapsule consisting of a polymer consisting of the monomers a) and b) wherein
a) is at least one polyisocyante containing at least 2 isocyanate groups, and
b) is at least an ester group containing compound of Formula IV.

Therefore, in one embodiment the instant invention relates to a microcapsule consisting of a polymer consisting of the monomers a) and b) wherein
a) is at least one polyisocyante containing at least 2 isocyanate groups, and
b) is at least an ester group containing compound of Formula IV and optionally further isocyanate reactive compounds b) different from IV.

Further, in another embodiment the instant invention relates to a microcapsule comprising a capsule core and a polymeric shell, wherein the shell comprises in polymerized form
a) at least one polyisocyante containing at least 2 isocyanate groups, and
b) at least an ester group containing compound of Formula IV and optionally further isocyanate reactive compounds b) different from IV,
which form the partially biodegradable shell.

Further, in another embodiment the instant invention relates to a microcapsule comprising a capsule core and a polymeric shell, wherein the shell comprises in polymerized form
a) at least one polyisocyante containing at least 2 isocyanate groups, and
b) at least an ester group containing compound of Formula IV and optionally further isocyanate reactive compounds b) different from IV,
which form the partially biodegradable shell, and
wherein in the capsule core comprises at least one active ingredient.

Therefore, in another embodiment the instant invention relates to a polymer obtained by the reaction of the monomers a) and b) wherein
a) is at least one polyisocyante containing at least 2 isocyanate groups, and
b) is at least an ester group containing compound of Formula IV.

In one particular embodiment, the present invention relates to a microcapsule formulation comprising as components
a): at least one isocyanate
b): at least one compound of Formula IV
c): at least one active ingredient,
d): optionally a water immiscible solvent,
e): optionally at least one emulsifier and/or dispersant,
f): at least one protective colloid,
g): optionally further additives,
i) water to volume
wherein components a) and b) are forming the shell of the microcapsule.

In one embodiment, component b) comprises the compound according to formula IV and further isocyanate reactive compounds b) different from compounds of formula IV,

In one embodiment, at least one component selected from d), e) and g) is mandatory.

In another embodiment, at least two components selected from d), e) and g) are mandatory.

In another embodiment components d), e) and g) are mandatory.

The microcapsules according to the invention have the following advantages:
- Small particle size and narrow particle size distribution
- Good tightness and mechanical stability
- Sprayable
- Partially made out of biodegradable building blocks

Furthermore the microcapsules and the formulations containing them can provide for a controlled release of the active ingredient.

The terms "biodegradation" or "biodegradability" are synonyms and mean in the sense of the invention that the polymers decompose in an appropriate and demonstrable period of time when exposed to the effects of the environment. The degradation mechanism can be hydrolytic and/or oxidative, and is based mainly on exposure to microorganisms, such as bacteria, yeasts, fungi, and algae. An example of a method for determining biodegradability mixes the polymer with compost and stores it for a particular time. According to ASTM D5338, ASTM D6400, EN 13432, and DIN V 54900, CO2 free air, by way of example, is passed through ripened compost during the composting process, and this compost is subjected to a defined temperature program. Biodegradability is defined here by way of the ratio of the net amount of CO2 liberated from the specimen (after deducting the amount of CO₂ liberated by the compost without the specimen) to the maximum possible amount of CO₂ liberated by the specimen (calculated from the carbon content of the specimen). Even after a few days of composting, biodegradable polymers generally show marked signs of degradation, for example fungal growth, cracking, and perforation. Alternative methods are described in OECD 301-307. The tests can be under aerobic or anaerobic conditions.

In another method of determining biodegradability, the polymer is incubated with a certain amount of a suitable enzyme at a certain temperature for a defined period, and then the concentration of the organic degradation products dissolved in the incubation medium is determined. By way of example, by analogy with Y. Tokiwa et al., American Chemical Society Symposium 1990, Chapter 12, "Biodegradation of Synthetic Polymers Containing Ester Bonds" the polymer can be incubated for a number of hours at from 30 to 37°C with a predeterminedamount of a lipase, for example from Rhizopus arrhizus, Rhizopus delemar, Achromobacter sp., or Candida cylindracea, and the DOC value (dissolved organic carbon) can then be measured on the reaction mixture freed from insoluble constituents.

Perferably, the materials undergo hydrolysis in the environment. The present invention likewise provides a process for producing the capsule suspension concentrates according to the invention, characterized in that an active ingredient c), optionally dissolved in an organic, water-immiscible solvent d), is mixed with the isocyanate mixture a) and optionally with an organic solvent and/or e) emulsifier and/or dispersant. The solution thus prepared is then emulsified in water comprising a protective colloid f), optionally in a mixture with further additives g). The Isocyanate a) is reacted with b) compound IV in the process either with b) being added into the water before emulsifying or being added after the emulsification step. Further additives g) can optionally added.

For production of the CS according to the invention, it is possible to use any apparatus customary for purposes of this kind that generates strong shear forces. Examples include rotor-stator mixers and jet dispersers.

In the performance of the process according to the invention, the ratio of NCO groups from component a) to NCO-reactive groups from component b) may be varied within a particular range. In general, 0.8 to 1.5 equivalents of amine or alcohol component are used per 1 mol of isocyanate. Preferably, the amounts of isocyanate and amine or alcohol are chosen such that equimolar amounts of isocyanate groups and of amino or hydroxyl groups are present.

In the performance of the process according to the invention, the reaction temperatures can be varied within a particular range.

The process according to the invention is generally conducted at temperatures between -10 and 80°C, preferably between 0°C and 50°C, more preferably between 2°C and 40°C, most preferably between 2°C and 30°C in the emulsification step.

The final curing of the polymer shell forming the microcapsules is generally at temperatures between -10°C and +80°C, preferably between 0°C and 80°C, generally at temperatures between 0°C and 80°C, preferably between 10°C and 75°C.

The wall thickness of the capsules of the capsule suspension concentrates according to the invention is between 0.001 and 4 µm, preferably between 0.01 and 2 µm and most preferably between 0.01 and 1 µm, wherein the wall thickness is preferably determined by calculation based on amount of active ingredient, average particle size of active ingredient and amount of polymeric shell material. This calculation can be done according to J Pharm Sci, 62, 1973, 452.

In the reaction of a) with b), the sum total of the number-average functionality X of isocyanate groups and isocyanate-reactive groups is 2 ≤ X ≤ 6, preferably 2 ≤ X ≤ 4.5, more preferably 2.0 ≤ X ≤ 3.5 and most preferably 2.2 ≤ X ≤ 2.8.

The "number-average functionality X" feature in the process according to the invention is illustrated as follows. It is the compound of higher functionality that is crucial here, and the result of subtracting 2 from the compound of lower functionality is added to the compound of higher functionality. If, for example, the (average) functionality of a) is 2.1 and that of b) is 2.6: 2.1 - 2 = 0.1. This difference is added to 2.6: 2.6 + 0.1 = 2.7. The number-average functionality is thus 2.7. Alternatively, if a) is 2.7 and ab) is 2.3, the number-average functionality is found to be 2.7 + 2.3 - 2 = 3.0.

The capsule suspension concentrates according to the invention feature a number of advantages. For instance, they are capable of releasing the active components in the amount required in each case over a prolonged period. It is also favourable that the plant compatibility of the active ingredients present is improved, and volatility and hence damage to neighbouring crops are reduced. Moreover, the acute toxicity of the active components is reduced, and so the deployment of the microcapsule formulations is unproblematic to the operators even without any great safety precautions.

Compound IV is defined as follows:

It has been found in the EP18181480.7 by Nouryon that a process to prepare amine-functional esters of aminocarboxylic acids and polyols (Formula IV) can be performed by dosing the polyol and (the cyclic amide of) aminocarboxylic acid in the right molar ratios of about n moles of aminocarboxylic on each mole polyol containing n hydroxyl groups, so that the polyol does not have to be distilled off and furthermore that the (trans)esterification reaction when performing the process in this way can be catalyzed by many Brønsted-Lowry acids in the absence of solvent or using a limited amount of solvent.

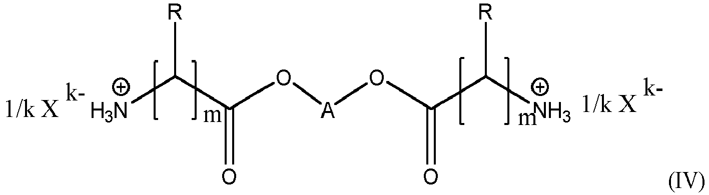

Esters of an amino carboxylic acid according to Formula IV can be prepared by an improved process comprising the steps of reacting a polyol of the formula (I)

HO-(A)-OH (I)

where A is a carbon chain with 2 to 36 carbon atoms that can be aliphatic (linear or branched, saturated or unsaturated) or aromatic, or CH₂CH(OH)CH₂, CH₂C(CH₂OH)₂ CH₂, CH₂C(CH₂H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids,
with an aminocarboxylic acid of formula II or its cyclic amide of the formula III 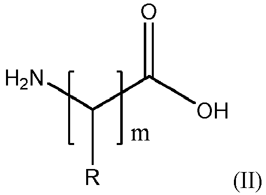 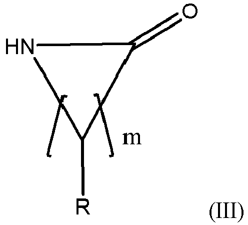 where m is an integer of 1-8 in formula II and 3-8 in formula III, each R independently is hydrogen or a C1-C4 alkyl group, or CH₂CH₂COOH, or CH₂COOH, or (CH₂)₄NH₂
in the presence of a Bronsted-Lowry acid at a temperature of between 60 and 200 degrees C wherein the total molar amount of aminocarboxylic acid or its cyclic amide to the molar amount of the polyol is between n:0.8 and n:1.5 wherein n is the total number of hydroxyl groups on the polyol and wherein the Bronsted-Lowry acid is not added to the reaction mixture until at least 50% of the total of the polyol and the aminocarboxylic acid or its cyclic amide are dosed.
In a preferred embodiment the Bronsted-Lowry acid is sulfuric acid.

By this reaction amine-functional esters of amino carboxylic acids can be obtained.

The compounds (IV) obtainable by the process of the invention can in many embodiments be covered by the below structure 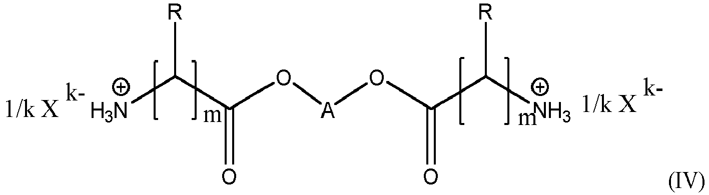
wherein k is a value of 1 to 3, and
wherein each R independently is hydrogen or a C1-C4 alkyl group, or CH₂CH₂COOH, or CH₂COOH, or (CH₂)₄HN₂, and
wherein A is is a carbon chain with 2 to 36 carbon atoms that can be aliphatic (linear or branched, saturated or unsaturated) or aromatic, or CH₂CH(OH)CH₂, CH₂C(CH₂OH)₂ CH₂, CH₂C(CH₂H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids as defined above,
and wherein each m is m is an integer of 1 to 8, preferably 1 to 8 if derived from formula II and and 3 to 8 if derived by formula III,
and X is an anion derivable from deprotonating a Brønsted-Lowry acid.

If following the above options for A, in the cases wherein the group A contains further hydroxyl substituents these may converted into groups wherein the proton of the OH group is substituted by the group of formula (V) 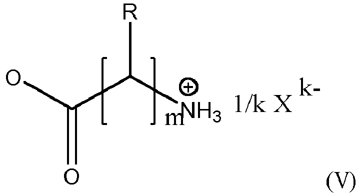 wherein k, each R independently, m and X are as defined above.

The compounds obtainable by the process of the invention may contain between 0 and 30 mole% on total moles of compounds (IV) of compounds below formula (VI) 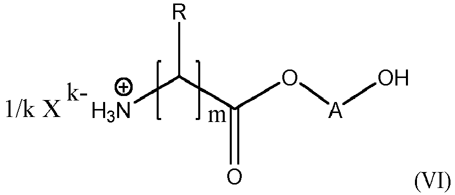 wherein k, each R independently, A, m and X are as defined above. Preferably the amount of compounds of formula VI is between 1 and 20 mole%, even more preferably between 2 and 15 mole%, most preferably 5 and 10 mole%, on total amount of compound IV.

The polyols that can be used in the process are compounds containing at least two hydroxyl groups of the formula HO-A-OH (I) where A is a carbon chain with 2 to 36 carbon atoms that can be aliphatic (linear or branched, saturated or unsaturated) or aromatic, or CH₂CH(OH)CH₂, CH₂C(CH₂OH)₂ CH₂, CH₂C(CH₂OH)(CH₃)CH₂, CH₂C(CH₂OH)(CH₂CH₃)CH₂, p-tetrahydrofuran, erythritol or esters of di(tri)carboxylic acids with ethylene or propylene glycol, optionally alkoxylated with one or more alkylene oxide unit or reacted with one or more hydroxy carboxylic acids.

Examples of polyols that are alkoxylated are HO-(CH₂-CH(R1)-O)p-CH₂-CH(R1)-(O-CH₂-CH(R1))p-OH, HO-(CH₂-CH(R1)-O)p-CH₂-CH=CH-CH₂-(O-CH₂-CH(R1))p-OH, HO-(CH₂-CH(R1)-O)p-CH₂-CH(CH₃)₂-CH₂-(O-CH₂-CH(R1))p-OH, HO-(CH₂-CH(R1)-O)p-C₆H₄-(O-CH₂-CH(R1))p-OH, HO-(CH₂-CH(R1)-O)p-CH₂-C₆H₄-CH₂-(O-CH₂-CH(R1))p-OH, HO-(CH₂-CH(R1)-O)p-C₆H₁₀-(O-CH₂-CH(R1))p-OH, HO-(CH₂-CH(R1)-O)p-CH₂-C₆H₁₀-CH₂-(O-CH₂-CH(R1))p-OH, HO-(CH₂-CH(R1)-O)p-CH₂-(CH₂)n-CH₂-(O-CH₂-CH(R1))p-OH, HO-(CH₂-CH(R1)-O)p-CH₂-CH₂-CH₂-CH₂-(O-CH₂-CH₂-CH₂-CH₂)p-(O-CH₂-CH(R1))p-OH, HO-(CH₂-CH(R1)-O)p-(CH₂)i-CH((CH₂)jCH₃)-CH((CH₂)jCH₃)-(CH₂)i-(O-CH₂-CH(R1))p-OH, HO-(CH₂-CH(R1)-O)p-CH₂-(CH(O-CH₂-CH(R1))p-OH))d-CH₂-(O-CH₂-CH(R1))p-OH, HO-(CH₂-CH(R1)-O)p-CH₂-C(CH₂-(O-CH₂-CH(R1))p-OH)₂-CH₂-(O-CH₂-CH(R1))p-OH, HO-(CH₂-CH(R1)-O)p-CH₂-C(CH₂-(O-CH₂-CH(R1))p-OH)(CH₃)-CH₂-(O-CH₂-CH(R1))p-OH, HO-(CH₂-CH(R1)-O)p-CH₂-C(CH₂-(O-CH₂-CH(R1))p-OH)(CH₂CH₃)-CH₂-(O-CH₂-CH(R1))p-OH, wherein each p is independently an integer of from 0-25, as long as one p in a structure is at least 1, n is 1-10, i+j=16, d=1-4 and each R1 independently is hydrogen atom or C1-C2 alkyl group.

Examples of polyols that are alcohols reacted with hydroxy carboxylic acids are compounds of below formulae: Hv-(CH(Z)-C(O)-O)p-CH₂-CH(R1)-(O-C(O)-CH(Z))p-OH, HO-(CH(Z)-C(O)-O)p-CH₂-CH=CH-CH₂-(O-C(O)-CH(Z))p-OH, HO-(CH(Z)-C(O)-O)p-CH₂-CH(CH₃)₂-CH₂-(O-C(O)-CH(Z))p-OH, HO-(CH(Z)-C(O)-O)p-C₆H₄-(O-C(O)-CH(Z))p-OH, HO-(CH(Z)-C(O)-O)p-CH₂-C₆H₄-CH₂-(O-C(O)-CH(Z))p-OH, HO-(CH(Z)-C(O)-O)p-C₆H₁₀-(O-C(O)-CH(Z))p-OH, HO-(CH(Z)-C(O)-O)p-CH₂-C₆H₁₀-CHz-(O-C(O)-CH(Z))p-OH, HO-(CH(Z)-C(O)-O)p-CH₂-(CH₂)n-CH₂-(O-C(O)-CH(Z))p-OH, HO-(CH(Z)-C(O)-O)p-CH₂-CH₂-CH₂-CH₂-(O-CH₂-CH₂-CH₂-CH₂)p-(O-C(O)-CH(Z))p-OH, HO-(CH(Z)-C(O)-O)p-(CH₂)i-CH((CH₂)jCH₃)-CH((CH₂)jCH₃)-(CH₂)i-(O-C(O)-CH(Z))p-OH, HO-(CH(Z)-C(O)-O)p-CH₂-(CH(O-C(O)-CH(Z))p-OH))d-CH₂-(O-C(O)-CH(Z))p-OH, HO-(CH(Z)-C(O)-O)p-CH₂-C(CH₂-(O-C(O)-CH(Z))p-OH)₂-CH₂-(O-C(O)-CH(Z))p-OH, HO-(CH(Z)-C(O)-O)p-CH₂-C(CH₂-(O-C(O)-CH(Z))p-OH)(CH₃)-CH₂-(O-C(O)-CH(Z))p-OH, HO-(CH(Z)-C(O)-O)p-CH₂-C(CH₂-(O-C(O)-CH(Z))p-OH)(CH₂CH₃)-CH₂-(O-C(O)-CH(Z))p-OH, HO-(CH(Z)-C(O)-O)p-CH₂(CH₂)k-CH(R1)-(O-C(O)-CH(Z))p-OH, HO(CH(Z)-C(O)-O)p-CH₂-(CH(O-C(O)-CH(Z)-OH)p)e-CH₂-(O-C(O)-CH(Z))pOH
wherein each p is independently an integer of from 0-25, as long as at least one p in a structure is at least 1, and each R1 independently is hydrogen atom or C1-C2 alkyl group, k is 0-10, if k>0 then R1 is hydrogen, Z is hydrogen or CH3, e=1-4.

Examples of polyols that are esters of di- or tricarboxylic acids with ethylene glycol or propylene glycol are compounds of below formula HO(CH₂CH(R1)-O)p-C(O)-CH₂-(C(OH)(C(O)(O-CH(R1)-CH₂)pOH)d-(CH₂)k-C(O)(O-CH(R1)-CH₂)pOH
wherein each p is independently an integer of from 0-25 as long as at least one p in a structure is at least 1, and each R1 independently is hydrogen atom or C1-C2 alkyl group, d=0-1, when d =1, then k=1; when d=0, then k=0-10

Most preferred polyols are selected from the group of ethylene glycol, propylene glycol, butylene glycol, polyethylene glycol, polypropylene glycol, polybutylene glycol, glycerol, poly tetrahydrofuran, pentaerythritol, trimethylolpropane, trimethylolethane, diethylenesuccinate, dimeric fatty alcohol, 1,6-hexandiol, 1,4-butandiol, 1,8-octandiol, 1,10-decandiol, erythritol, optionally alkoxylated or reacted with hydroxy carboxylic acid. When using polyethylene glycol, polypropylene glycol or polybutylene glycol these preferably contain 2 to 10 ethyleneoxide, propyleneoxide, resp butyleneoxide units, even more preferably 2 to 6 units.

Mixtures of two or more polyols may also be employed.

Preferred aminocarboxylic acids of formula II are glycine, alanine, valine, leucine, isoleucine, lysine, aspartic acid, and glutamic acid, more preferred are glycine or alanine.
Further preferred aminocarboxylic acids of formula II are selected from the group of 6-aminohexanoic acid, 4-aminobutanoic acid.

In a preferred embodiment a cyclic amide of formula III is employed in the process of the invention. It is more preferred that in formula III m is 3, 4, 5 or 6. Most preferred are the cyclic amides of 6-aminohexanoic acid, 4-aminobutanoic acid.

It should be noted that a mixture of aminocarboxylic acids and/or of cyclic amides can also be employed in the process.

Preferred amine-functional esters of formula (IV) include

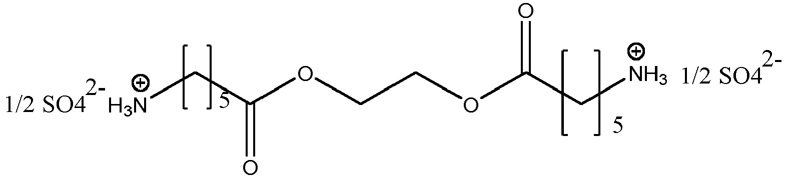

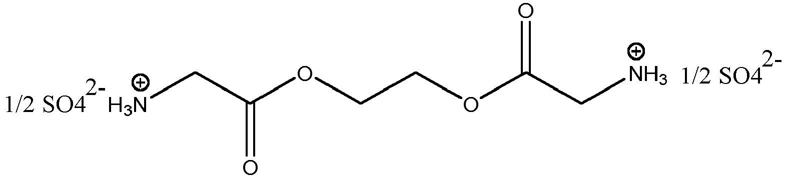

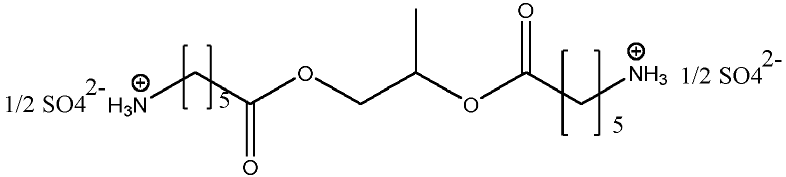

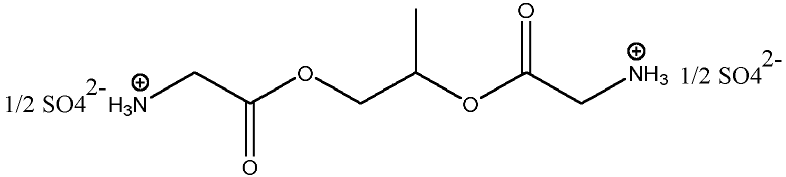

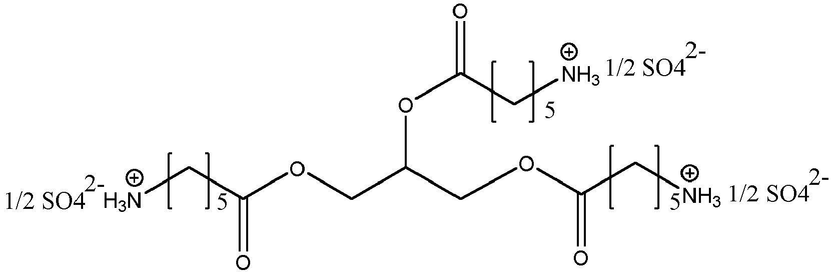

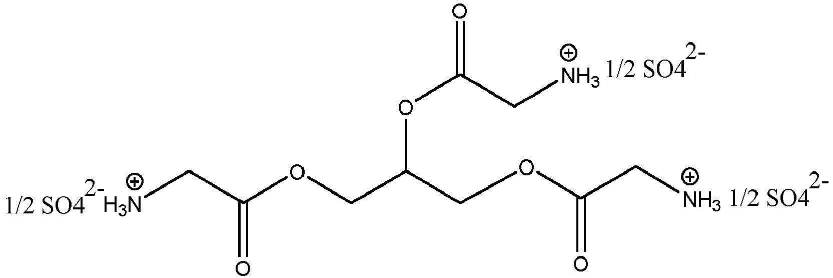

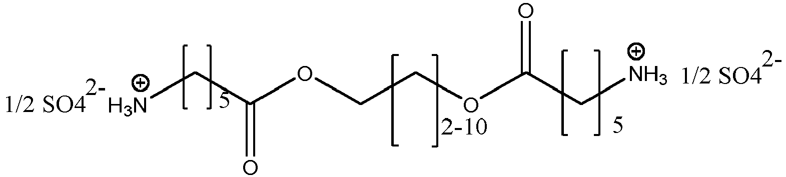

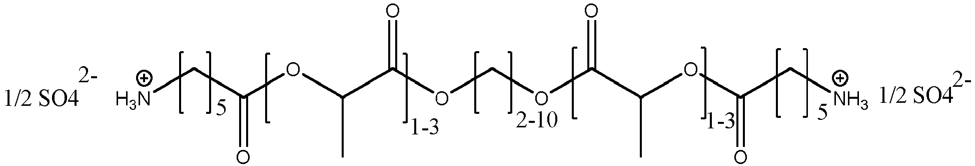

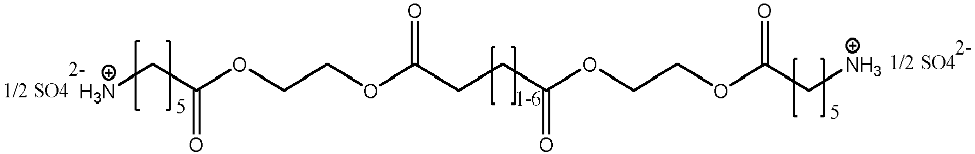

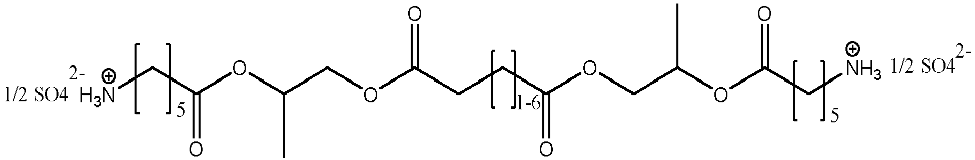

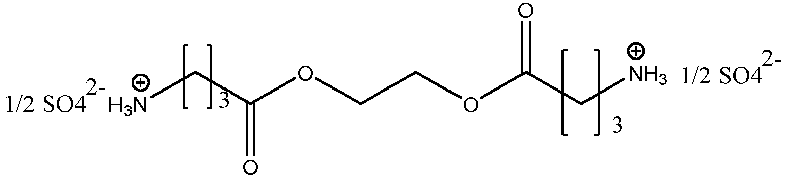

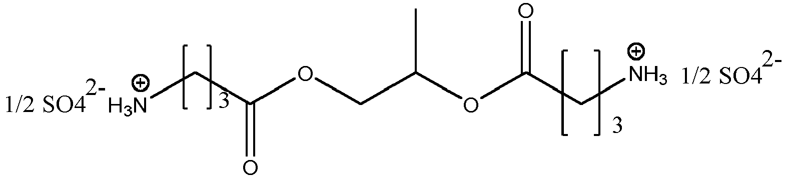

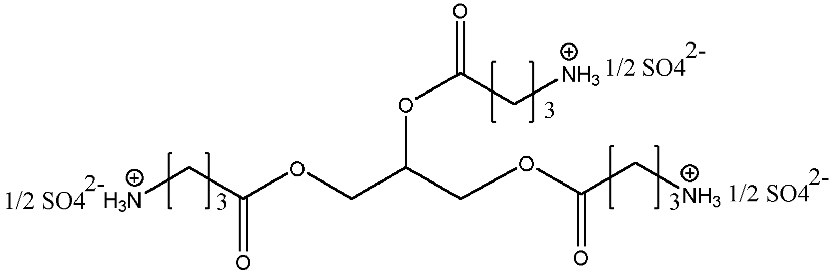

The compounds of formula (IV), (VI) were determined to have an improved biodegradability and/or chemical degradability compared to many commercially available amine-functional compounds that contain at least two amine groups, which adds to the environmental profile of any application in which they are used. They can be employed as alternatives with better degradability profile in applications wherein diamines/polyamines are presently used such as in the preparation of polymers that contain diamine monomers. Such polymers include polyurea, polyepoxide, and polyamide polymers and there is a desire to make such polymers biodegradable. Furthermore, they can be employed as building blocks wherein the amine is further modified to make imide- or (meth)acrylamide-functional monomers.
In preferred embodiments the compounds of formula (IV), (VI) are readily biodegradable.

In a preferred embodiment of the process of the invention the aminocarboxylic acid is used in its cyclic amide form (of formula III). The advantage of performing a transesterification reaction of a cyclic amide of an amino carboxylic acid instead of an esterification of an amino carboxylic acid or salt thereof is that it is much easier to control the amount of water in the process. When doing a transesterification reaction there is no net formation of water. When performing an esterification reaction, more water will form and such increased water content may give rise to side reactions, such as in particular under an acidic pH, a hydrolysis reaction wherein formed product falls apart in the starting compounds again. Also, when attempting to remove water from the reaction mixture, the reactants, most notably the polyols, might form an azeotrope with the water and get lost as well.

In the process of the invention the amino carboxylic acid or its cyclic amide derivative of formula (III), and the polyol are preferably employed in a molar ratio of total aminocarboxylic acid and/or cyclic amide of formula (III) to polyol that is preferably between n:0.8 and n:1.3, more preferably between n:0.9 and n:1.1, wherein n stands for the number of hydroxyl groups on the polyol, most preferably both compounds are used in a substantially equimolar amount of about 1 mole of aminocarboxylic acid per hydroxyl group.
In a preferred embodiment during the process the molar amount of water on total moles of polyol is between 0 and 10 mole%, more preferably 0.01 and 5 mole%, most preferably 0.1 and 2 mole%.

After the reaction is completed, optionally (to decrease viscosity) the product can be diluted with water and/or an organic polar solvent. The preferred organic solvents are glycolic solvents, such as propylene glycol, triethylene glycol, ethylene glycol, 2-methoxyethanol, glycerol, or isopropanol.

The Brønsted-Lowry acid is preferably used as a concentrated (i.e. 20 to 100 wt%) aqueous solution and dosed to the reaction mixture containing all the aminocarboxylic acid or its cyclic amide and the polyol in portions to control the exothermal effect of the reaction.

The Brønsted-Lowry acid is not an aminocarboxylic acid. The Bronsted-Lowry acid is preferably an acid with a pKa of between -10 and 3. The Bronsted-Lowry acid is even more preferably an inorganic acid, even more preferably it is sulfuric acid, phosphoric acid or a hydrohalic acid and most preferably it is sulfuric acid as hydrohalic acids such as HCl in embodiments result in solid products and phosphoric acid results in lower conversions. Moreover, both HCl and H3PO4 as a liquid are available as solutions with quite some water (HCl 37% conc, H3PO4 85% conc) while H2SO4 is available in substantially water-free form (such as 95-98% concentrate). The use of H2SO4 therefore allows to get products of high conversion (>90%) in a liquid form, and moreover no need to evaporate water exists.

X is in a preferred embodiment an anion derived from an inorganic Bronsted-Lowry acid, more preferred a halogenide, sulphate, hydrogen sulfate, hydrogen phosphate, dihydrogen phosphate, or phosphate anion. Most preferably, X is a sulfate or hydrogen sulfate anion.

The process can be done under reduced pressure but is preferably performed at a pressure that is atmospheric.

The product can optionally be neutralized by a base to a pH from 3-7. The product can be purified by methods available to someone skilled in the art. However, because of the low level of side products, it can also be used without further processing or purification steps, such as as a surfactant.

The process is very favorable for polyols that have a boiling point up to 220 deg C, or, for polyols that can form an azeotrope with water having a boiling point lower than 220 deg C. Compared to the state of the art processes, in the process of the invention when using such polyols, they will not be stripped from the reaction mixture when reaction water is removed, as in the process of the invention no such water is formed and hence does not need to be removed. Many polyols that can be used in the process of the invention have a boiling point in this range (especially the polyols that are smaller or that contain some branching in their structure).

The process is preferably done at a temperature of between 60 and 150 deg C, more preferably between 80 and 145 deg C, most preferably 110 and 140 deg C.

Useful alternative, optionally further added compounds b) that can be mixed additional with compound IV as further isocyanate-reactive group b) include aliphatic, aromatic, cyclic and alicyclic primary and secondary diamines, and also polyamines. Examples include ethylenediamine (1,2), diethylenetriamine, monoisopropylamine, 4-aminopyridine (4-AP), n-propylamine, ethylene- or propylenimine-based polyaziridine, triethylenetetraamine (TETA), tetraethylenepentamine, 2,4,4'-triaminodiphenyl ether, bis(hexamethylene)triamine, ethylenediamine (EDA), trimethylenedipiperidine (TMDP), guanidine carbonate (GUCA), phenylenediamine, toluenediamine, pentamethylenehexamine, 2,4-diamino-6-methyl-1,3,5-triazine, 1,2-diaminocyclohexane, 4,4'-diaminodiphenylmethane, 1,5-diaminonaphthalenisophoronediamine, diaminopropane, diaminobutane, piperazine, aminoethylenepiperazine (AEP), poly(propylene glycol) bis(2-aminopropyl ether) or o,o'-bis(2-aminopropyl)polypropylene glycol-block-polyethylene glycol-block-polypropylene glycol, hexamethylenediamine, bis(3-aminopropyl)amine, bis(2-methylaminoethyl)methylamine, 1,4-diaminocyclohexane, 3-amino-1-methylaminopropane, N-methylbis(3-aminopropyl)amine, 1,4-diamino-n-butane and 1,6-diamino-n-hexane.

Useful compounds having isocyanate-reactive group b) likewise include primary and secondary, aliphatic and aromatic dialcohols and polyalcohols. Examples include: ethanediol, propanediol (1,2), propanediol (1,3), butanediol (1,4), pentanediol (1,5), hexanediol (1,6), glycerol and diethylene glycol. Preference is given to using glycerol and propane- 1,2-diol.

Compounds having isocyanate-reactive group b) also include amino alcohols. Examples include triethanolamine, monoethanolamine, triisopropanolamine, diisopropylamine, N-methylethanolamine, N-methyldiethanolamine.

In one embodiment, water is used as isocyanate-reactive component b). It is reacted in situ with the isocyanate (poly/di) to give an amine (poly/di). It is likewise possible to use blends of b).

The isocyanate mixture a) is a mono-, di- and/or polyisocyanate mixture, or a reaction product of isocyanate mixtures. Suitable compound a) are, for example, butylene 1,4-diisocyanate, hexamethylene 1,6-diisocyanate (HDI), isophorone diisocyanate (IPDI), 2,2,4- and/or 2,4,4-trimethylhexamethylene diisocyanate, the isomeric bis(4,4'-isocyanatocyclohexyl)methanes (H12-MDI) and mixtures thereof with any isomer content, cyclohexylene 1,4-diisocyanate, 4-isocyanatomethyloctane 1,8-diisocyanate (nonane triisocyanate), phenylene 1,4-diisocyanate, tolylene 2,4- and/or 2,6-diisocyanate (TDI), naphthylene 1,5-diisocyanate, diphenylmethane 2,2'- and/or 2,4'- and/or 4,4'-diisocyanate (MDI), 1,3- and/or 1,4-bis(2-isocyanatoprop-2-yl)benzene (TMXDI), 1,3-bis(isocyanatomethyl)benzene (XDI), alkyl 2,6-diisocyanatohexanoates (lysine diisocyanates) having alkyl groups having 1 to 8 carbon atoms, and mixtures thereof. Compounds comprising modifications such as allophanate, uretdione, urethane, isocyanurate, biuret, iminooxadiazinedione or oxadiazinetrione structure and based on said diisocyanates are also suitable units for component a2), as also are polycyclic compounds, for example polymeric MDI (pMDI, for instance PAPI-27 from Dow or Desmodur® 44V20 products from Covestro AG) and combinations of the above.

Preference is given to modifications having an isocyanate (NCO) functionality of 2 to 6, preferably of 2.0 to 4.5 and more preferably of 2.3 to 4.2 and most preferably of 2.3 to 3.8. Especially preferred is an NCO functionality of 2.4 to 2.8.

Preference is given to modification using diisocyanates from the group of HDI, IPDI, H12-MDI, TDI and MDI. Particular preference is given to TDI and MDI, and derivatives thereof. Especially preferred MDI is polymeric MDI such as PAPI-27 used in a blend with TDI. The preferred NCO content of the isocyanate or polyisocyanate or blend is between 3% and 50% by weight, more preferably between 10% and 40% by weight, more preferably between 15% and 35% by weight and most preferably between 18% and 30% by weight. The isocyanate groups may also be present in partially or completely blocked form prior to their reaction with the isocyanate-reactive groups, in such a way that they cannot react immediately with the isocyanate-reactive group. This ensures that the reaction does not take place until a particular temperature (blocking temperature) has been reached. Typical blocking agents can be found in the prior art and are selected such that they are eliminated again from the isocyanate group at temperatures between 60 and 220°C, according to the substance, and only then react with the isocyanate-reactive group. There are blocking agents which become incorporated into the polyurethane, and there are also those which remain as solvents or plasticizers in the polyurethane, or are evolved as gases from the polyurethane. The expression "blocked NCO values" is sometimes used. When the expression "NCO values" is used in the invention, this always refers to the unblocked NCO value. The usual extent of blocking is up to < 0.5%. Examples of typical blocking agents are caprolactam, methyl ethyl ketoxime, pyrazoles, for example 3,5-dimethyl-1,2-pyrazole or 1,-pyrazole, triazoles, for example 1,2,4-triazole, diisopropylamine, diethyl malonate, diethylamine, phenol and derivatives thereof, and imidazole.

Component a) may also be used in the form of a mixture of the above compounds or else of a prepolymer. In this case, for example, a compound containing isocyanate groups and having an NCO content between 3% and 50% by weight is reacted with compounds containing toward isocyanate-reactive groups and having an OH number between 10 mg KOH/g and 150 mg KOH/g.

Useful organic solvents d) include all customary organic solvents that on the one hand have low miscibility with water, but on the other hand dissolve the active agrochemical ingredients used with good solubility.

Low miscibility in context of the present invention shall mean a miscibility with water of less than 1 wt%. Preferred examples include aliphatic and aromatic, optionally halogenated hydrocarbons such as toluene, xylene, Solvesso® 100, 100ND, 150, 150 ND or 200, 200 ND (mineral oil), tetrachloromethane, chloroform, methylene chloride and dichloroethane, and also esters such as ethyl acetate, and alkanecarboxamides such as N,N-dimethyloctanamide and N,N-dimethyldecanamide. In addition come vegetable oils and modified oil (for example by methylation, ethylation and also hydrogenation and hydration) based, for example, on rapeseed oil, maize kernel oil, coconut oil or the like. Particular preference is given to using mineral oil, very particular preference to using solvents based on a from dialkylnaphthalene (for example diisopropylnaphthalene), and mixture of 1-methyl- and 2-methylnaphthalene and naphthalene (for example Solvesso® 200 ND products, CAS No.: 64742-94-5).

Useful emulsifiers e) include standard surface-active substances present in formulations of active agrochemical ingredients. Examples include ethoxylated nonylphenols, polyethylene glycol ethers of linear alcohols, reaction products of alkylphenols with ethylene oxide and/or propylene oxide, and also fatty acid esters, alkylsulfonates, alkyl sulfates and aryl sulfates. The emulsifier can be added in the oil and/or in the aqueous phase. Prefeably the emulsifier is added in the aqueous phase.

Suitable anionic dispersants e), such as emulsifiers, surfactants, wetting agents and dispersers, are, for example, alkali metal, alkaline earth metal or ammonium salts of sulfonates, sulfates, phosphates, carboxylates and mixtures thereof, for example the salts of alkylsulfonic acids or alkylphosphoric acids and alkylarylsulfonic or alkylarylphosphoric acids, diphenylsulfonates, alpha-olefinsulfonates, lignosulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols or of fatty acid esters. Examples of phosphates are phosphate esters. Examples of carboxylates are alkyl carboxylates and carboxylated alcohol ethoxylates or alkylphenol ethoxylates. Likewise suitable is the group of anionic emulsifiers of the alkali metal, alkaline earth metal and ammonium salts of the polystyrenesulfonic acids, salts of the polyvinylsulfonic acids, salts of the alkylnaphthalenesulfonic acids, salts of alkylnaphthalenesulfonic acid-formaldehyde condensation products, salts of condensation products of naphthalenesulfonic acid, phenolsulfonic acid and formaldehyde. Examples are calcium dodecylbenzenesulfonate such as Rhodocal® 70/B (Solvay), Phenylsulfonat CA100 (Clariant) or isopropylammonium dodecylbenzenesulfonates such as Atlox® 3300B (Croda). Alternatively Breakthru Additives can be added such as e.g. Polyether Modified Trisiloxane.

Further typical representatives include Phenylsulfonat CA (calcium dodecylbenzenesulfonate), Soprophor® products (optionally esterified derivatives of tristyrylphenol ethoxylates), Emulsogen® 3510 (alkylated EO/PO copolymer), Emulsogen® EL 400 (ethoxylated castor oil), Tween® products (fatty acylated sorbitan ethoxylates), Calsogen® AR 100 (calcium dodecylbenzenesulfonate). Preference is given to combinations of salts of alkylated aromatic sulfonic acids, such as calcium phenylsulfonate and/or Calsogen® AR 100, with alkylated copolymers of ethylene oxide and propylene oxide, such as Emulsogen® 3510. Particular preference is given to combinations of salts of dodecylbenzenesulfonic acid, such as Calsogen® AR 100, with alkylated copolymer of ethylene oxide and propylene oxide, such as Emulsogen® 3510.

Examples of further anionic emulsifiers e) from the group of the naphthalenesulfonates are Galoryl® MT 800 (sodium dibutylnaphthalenesulfonate), Morwet® IP (sodium diisopropylnaphthalenesulfonate) and Nekal® BX (alkylnaphthalenesulfonate). Examples of anionic surfactants from the group of the condensates of naphthalenesulfonates with formaldehyde are Galoryl® DT 201 (naphthalenesulfonic acid hydroxy polymer with formaldehyde and methylphenol sodium salt), Galoryl® DT 250 (condensate of phenol- and naphthalenesulfonates), Reserve® C (condensate of phenol- and naphthalenesulfonates) or Morwet® D-425, Tersperse® 2020. Preference is given to 1,2-dibutyl- or -diisobutyl-substituted naphthalenesulfonates, for example products such as Galoryl® MT 800 (CFPI-Nufarm) and Nekal® BX (BASF). Further typical surfactants are Soprophor® 3D33, Soprophor® 4D384, Soprophor® BSU, Soprophor® CY/8 (Solvay) and Hoe® S3474, and in the form of the Sapogenat® T products (Clariant), for example Sapogenat® T 100.

Useful nonionic dispersants e), such as emulsifiers, wetting agents, surfactants and dispersers, include standard surface-active substances present in formulations of active agrochemical ingredients. Examples include ethoxylated nonylphenols, reaction products of linear or branched alcohols with ethylene oxide and/or propylene oxide, ethylene oxide-propylene oxide block copolymers, end group-capped and non-end group-capped alkoxylated linear and branched, saturated and unsaturated alcohols (e.g. butoxy polyethylene-polypropylene glycols), reaction products of alkylphenols with ethylene oxide and/or propylene oxide, ethylene oxide-propylene oxide block copolymers, polyethylene glycols and polypropylene glycols, and also fatty acid esters, fatty acid polyglycol ether esters, alkylsulfonates, alkylsulfates, arylsulfates, ethoxylated arylalkylphenols, for example tristyrylphenol ethoxylate having an average of 16 ethylene oxide units per molecule, and also ethoxylated and propoxylated arylalkylphenols, and also sulfated and phosphated arylalkylphenol ethoxylates or ethoxy- and propoxylates. Particular preference is given to tristyrylphenol alkoxylates and fatty acid polyglycol ether esters. Very particular preference is given to tristyrylphenol ethoxylates, tristyrylphenol ethoxy propoxylates and castor oil polyglycol ether esters, in each case individually or in mixtures. Additives may additionally be useful, such as surfactants or esters of fatty acids, which contribute to improvement in biological efficacy. Suitable nonionic emulsifiers b2) are, for example, Soprophor® 796/P, Lucramul® CO30, Lucramul® HOT, Lucramul® PSI 100 or Synperonic® T304.

Suitable nonionic dispersers e) may likewise be selected from the group comprising polyvinylpyrrolidone (PVP), polyvinyl alcohol, copolymer of PVP and dimethylaminoethyl methacrylate, butylated PVP, copolymer of vinyl chloride and vinyl acetate, and partially hydrolysed vinyl acetate, phenol resins, modified cellulose types, for example Luviskol® (polyvinylpyrrolidone), Mowiol® (polyvinyl alcohol) or modified cellulose. Preference is given to polyvinylpyrrolidone types, particular preference to types of low molecular weight such as Luviskol® K30 or Sokalan® K30.

Useful further nonionic emulsifiers e) from the group of the di- and triblock copolymers of alkylene oxides are, for example, compounds based on ethylene oxide and propylene oxide, having mean molar masses between 200 and 10 000 and preferably 1000 to 4000 g/mol, where the proportion by mass of the polyethoxylated block varies between 10% and 80%, for example the Synperonic® PE series (Uniqema), the Pluronic® PE series (BASF), the VOP® 32 or Genapol® PF series (Clariant).

Useful protective colloids f) include all substances typically used for this purpose. Preferred examples include natural and synthetic water-soluble polymers such as gelatin, starch and cellulose derivatives, especially cellulose esters and cellulose ethers, such as methyl cellulose, and also polyvinyl alcohols, partly hydrolysed polyvinyl acetates, lignosulfonates (such as Borresperse®A, REAX® 88 Kraftsperse® 25 S), modified naphthalenesulfonates (for instance Morwet D-425), polyvinylpyrrolidones and polyacrylamides. Particular preference is given to using polyvinyl alcohols, partly hydrolysed polyvinyl acetates and lignosulfonates. Most preferably polyvinyl alcohols and/or lignosulfonates.

Useful further additives g) include
- organic thickeners and inorganic thickeners. Useful organic thickeners include organic natural or biotechnologically modified or organic synthetic thickeners. Typical synthetic thickeners are Rheostrux® (Croda) or the Thixin® or Thixatrol® series (Elementis). These are typically based on acrylates. Typical organic thickeners are based on xanthan or cellulose (for instance hydroxyethyl or carboxymethyl cellulose) or a combination thereof. Further typical representatives are based on cellulose or lignin. Preference is given to using natural modified thickeners based on xanthan. Typical representatives are, for example, Rhodopol® (Solvay) and Kelzan® (Kelco Corp.), and also Satiaxane® (Cargill). Preference is likewise given to silicas and attapulgites.
- Preservatives, which include all substances typically present for this purpose in crop protection compositions. Examples include Acticide® SPX (Thor) and Proxel® GXL (Lonza).
- Defoamers, which include all substances typically usable for this purpose in crop protection compositions. Preference is given to silane derivatives, such as polydimethylsiloxanes, and magnesium stearate. Typical products are Silcolapse® 484 (Solvay, Silioxane Emulsion) and SAG 1571 (Momentive) used.
- Substances that function as cold stabilizers may be all of those typically usable for this purpose in crop protection compositions. Examples include urea, glycerol and propylene glycol.
- pH stabilizers and neutralizing agents, which include customary acids and bases. Examples include phosphoric acid, citric acid, sodium hydroxide solution and aqueous ammonia solution.
- Suitable carrier materials which are selected from the group of the highly absorptive carriers having an absorption capacity of at least 200 g of dibutyl phthalate per 100 g of carrier material. Preferred highly absorptive carriers g) are silicas, for example Sipernat® products (synthetic precipitated silica of high absorptivity) and fumed silica (Aerosil® products). Preference is given to precipitated silica.

The proportion of a) is generally between 0.1% and 8% by weight, preferably between 0.2% and 4.5% by weight, more preferably between 0.3% and 4% by weight, the proportion of active agrochemical ingredient c) is generally between 1% and 50% by weight, preferably between 5% and 40% by weight, more preferably between 10% and 20% by weight, the proportion of organic solvent d) is generally between 0% and 90% by weight, preferably between 10% and 60% by weight, more preferably between 20% and 40% by weight and most preferably between 25% and 40% by weight, the proportion of protective colloids f) is generally between 0.1% and 5% by weight, preferably between 0.2% and 3% by weight, more preferably between 0.3% and 1.5% by weight, and the proportion of additives g) is generally between 0.1% and 15% by weight, preferably between 0.3% and 10% by weight and more preferably between 0.4% and 3% by weight, all based on the total weight of the agrochemical formulation..

In respect of the abovementioned proportions of the respective ingredients, it will be clear to the person skilled in the art that the preferred ranges for the individual ingredients can be combined freely with one another, and so these compositions of different preferred ranges for individual ingredients are also considered to be disclosed.

However, particular preference is given, unless stated otherwise, to preferred ranges from the same level, i.e. all preferred or more preferred ranges, and a specific disclosure is not intended to replace these general combinations but to add to them.

The same applies to other specifications of preferred ranges elsewhere in the present description.

In a preferred embodiment, the proportion of a) and b) is between 0.1% and 8% by weight,
the proportion of active agrochemical ingredient c) is between 1% and 50% by weight,
the proportion of organic solvent d) is between 0% and 60% by weight,
the proportion of protective colloids f) is between 0.1% and 5% by weight,
and the proportion of additives g) is between 0.1% and 15% by weight.

In a further-preferred embodiment, the proportion of a) and b) is between 0.1% and 8% by weight,
the proportion of active agrochemical ingredient c) is between 1% and 50% by weight,
the proportion of organic solvent d) is between 0% and 40% by weight,
the proportion of protective colloids f) is between 0.1% and 5% by weight,
and the proportion of additives g) is between 0.1% and 15% by weight.

In an even further-preferred embodiment, the proportion of a) and b) is between 0.1% and 8% by weight,
the proportion of active agrochemical ingredient c) is between 1% and 50% by weight,
the proportion of organic solvent d) is between 0% and 40% by weight,
the proportion of protective colloids f) is between 0.1% and 5% by weight,
and the proportion of additives g) is between 0.1% and 15% by weight.

In a further embodiment, the proportion of a) and b) is between 0.1% and 8% by weight,
the proportion of active agrochemical ingredient c) is between 1% and 50% by weight,
the proportion of organic solvent d) is between 0% and 90% by weight,
the proportion of protective colloids f) is between 0.1% and 5% by weight,
and the proportion of additives g) is between 0.1% and 15% by weight.

In a further embodiment, the proportion of a) and b) is between 0.2% and 4.5% by weight,
the proportion of active agrochemical ingredient c) is between 5% and 40% by weight,
the proportion of organic solvent d) is between 0% and 60% by weight,
the proportion of protective colloids f) is between 0.2% and 3% by weight,
and the proportion of additives g) is between 0.3% and 10% by weight.

In a further preferred embodiment, the proportion of a) and b) is between 0.2% and 4.5% by weight,
the proportion of active agrochemical ingredient c) is between 10% and 20% by weight,
the proportion of organic solvent d) is between 0% and 40% by weight,
the proportion of protective colloids f) is between 0.3% and 1.5% by weight,
and the proportion of additives g) is between 0.4% and 3% by weight.

In a further embodiment, the proportion of a) and b) is between 0.3% and 2.5% by weight,
the proportion of active agrochemical ingredient c) is between 10% and 20% by weight,
the proportion of organic solvent d) is between 0% and 40% by weight,
the proportion of protective colloids f) is between 0.3% and 1.5% by weight,
and the proportion of additives g) is between 0.4% and 3% by weight.

In a further embodiment, the proportion of a) and b) is between 0.3% and 2.5% by weight,
the proportion of active agrochemical ingredient c) is between 10% and 20% by weight,
the proportion of organic solvent d) is between 0% and 40% by weight,
the proportion of protective colloids f) is between 0.3% and 1.5% by weight,
and the proportion of additives g) is between 0.4% and 3% by weight.

Wherein in the foregoing water is added respectively to volume.

However, water is preferably present between 20-60 % by weight, more preferred between 30-50% by weight, and most preferred between 35-50 % by weight.

Preferably, the ratio of active agrochemical ingredient c) to the isocyanate mixture a) is between 7:1 and 40:1, preferably between 8:1 and 20:1, more preferably between 9:1 and 18:1.

The ratio of isocyanate-reactive groups b) to the isocyanate mixture c) is between 0 and 1.2, preferably between 0 and 1.1, more preferably between 0.8 and 1.1, more preferably 0.9 and 1.1 and most preferably 0.95 and 1.05.

Moreover, the organic solvent d) in the aforementioned embodiments is preferably a mineral oil, further preferably a solvent based on dialkylnaphthalene (for example diisopropylnaphthalene), or else a mixture of 1-methyl- and 2-methylnaphthalene and naphthalene (for example Solvesso® 200 ND products, CAS No.: 64742-94-5), where a as solvent a mixture of 1-methyl- and 2-methylnaphthalene and naphthalene is very particularly preferred. If the active ingredient c) is liquid at room temperature, preferably no solvent as e.g. in the case of Clomazone or Acetochlor is used. In a preferred embodiment, the active ingredient can act as a solvent d) for a further active ingredient c) that can be solid at room temperature.

The active ingredient c) may be any agrochemically active compound, in particular a herbicide, an insecticide or a fungicide or mixtures thereof.

The active compounds identified here by their common names are known and are described, for example, in the pesticide handbook ("The Pesticide Manual" 16th Ed., British Crop Protection Council 2012) or can be found on the Internet (e.g. http://www.alanwood.net/pesticides). The classification is based on the current FRAC, HRAC, IRAC Mode of Action Classification Scheme at the time of filing of this patent application.

Preferred active herbicidal ingredients c) are aclonifen, aminopyralid, benzofenap, bifenox, bromoxynil, bromoxynil butyrate, potassium heptanoate and octanoate, butachlor, bixlozone, clomazone, clopyralid, 2,4-D also comprising the following frequently used forms: 2,4-D-butotyl, 2,4-D-butyl, 2,4-D-dimethylammonium, 2,4-D-diolamine (2,4-D-diethanolammonium), 2,4-D-ethyl, 2,4-D-2-ethylhexyl, 2,4-D-isobutyl, 2,4-D-isooctyl, 2,4-D-isopropyl, 2,4-D-isopropylammonium, 2,4-D-sodium, 2,4-D-triisopropanolammonium, 2,4-D-trolamine (2,4-D-triethanolammonium, diflufenican, 2-[(2,4-dichlorophenyl)methyl]-4,4'-dimethyl-3-isoxazolidinone (CAS Number 81777-95-9 or IPUAC 2-(2,4-dichlorobenzyl)-4,4-dimethyl-1,2-oxazolidin-3-one, Cinmethylin, dimethachlor, dimethenamid, dimethenamid-P, ethoxysulfuron, fenoxaprop, fenoxaprop-P, penoxaprop-ethyl, fenoxaprop-P-ethyl, fenquinotrione, fentrazamide, florasulam, flufenacet, fluroxypyr, fluroxypyr-meptyl, foramsulfuron, halauxifen-methyl, iodosulfuron iodosulfuron-methyl-sodium, isoxaflutole, MCPA (4-chloro-2-methylphenoxy)acetic acid, also comprising the following frequently used forms: MCPA-butotyl, MCPA-dimethylammonium, MCPA-isoctyl, MCPA-sodium, MCPA-potassium, MCPA-2-ethylhexyl, mefenacet, mesosulfuron, mesosulfuron-methyl, metazachlor, metolachlor, S-metolachlor, metosulam, metribuzin, napropamid, nicosulfuron, oxadiargyl, oxadiazon, pendimethalin, pethoxamid, picloram, propoxycarbazone, propoxycarbazone-sodium, propyzamid, prosulfocarb, pyrasulfotole, pyroxasulfone, pyroxsulam, quinmerac, tefuryltrione, tembotrione, thiencarbazone, thiencarbazone-methyl, triafamone.

Preferred safeners which shall be included in compounds c are the following safeners named component s) :
s1) Compounds from the group of heterocyclic carboxylic acid derivatives:
   s1^{a}) Compounds of the dichlorophenylpyrazoline-3-carboxylic acid type (S1^{a}), preferably compounds such as
      1-(2,4-dichlorophenyl)-5-(ethoxycarbonyl)-5-methyl-2-pyrazoline-3-carboxylic acid, ethyl 1-(2,4-dichlorophenyl)-5-(ethoxycarbonyl)-5-methyl-2-pyrazoline-3-carboxylate (S1-1) ("mefenpyr-diethyl"), and related compounds as described in WO-A-91/07874;
   s1^{b}) Derivatives of dichlorophenylpyrazolecarboxylic acid (S1^{b}), preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4) and related compounds as described in EP-A-333 131 and EP-A-269 806;
   s1^{c}) Derivatives of 1,5-diphenylpyrazole-3-carboxylic acid (S1^{c}), preferably compounds such as ethyl 1-(2,4-dichlorophenyl)-5-phenylpyrazole-3-carboxylate (S1-5), methyl 1-(2-chlorophenyl)-5-phenylpyrazole-3-carboxylate (S1-6) and related compounds as described, for example, in EP-A-268554;
   s1^{d}) Compounds of the triazolecarboxylic acid type (S1^{d}), preferably compounds such as fenchlorazole (ethyl ester), i.e. ethyl 1-(2,4-dichlorophenyl)-5-trichloromethyl-(1H)-1,2,4 triazole-3-carboxylate (S1-7), and related compounds, as described in EP-A-174 562 and EP-A-346 620;
   s1^{e}) Compounds of the 5-benzyl- or 5-phenyl-2-isoxazoline-3-carboxylic acid or of the 5,5-diphenyl-2-isoxazoline-3-carboxylic acid type (S1^{e}), preferably compounds such as ethyl 5-(2,4-dichlorobenzyl)-2-isoxazoline-3-carboxylate (S1-8) or ethyl 5-phenyl-2-isoxazoline-3-carboxylate (S1-9) and related compounds as described in WO-A-91/08202, or 5,5-diphenyl-2-isoxazolinecarboxylic acid (S1-10) or ethyl 5,5-diphenyl-2-isoxazoline-3-carboxylate (S1-11) ("isoxadifen-ethyl") or n-propyl 5,5-diphenyl-2-isoxazoline-3-carboxylate (S1-12) or ethyl 5-(4-fluorophenyl)-5-phenyl-2-isoxazoline-3-carboxylate (S1-13), as described in patent application WO-A-95/07897.
s2) Compounds from the group of the 8-quinolinoxy derivatives (S2):
   s2^{a}) Compounds of the 8-quinolinoxyacetic acid type (S2^{a}), preferably 1-methylhexyl (5-chloro-8-quinolinoxy)acetate ("cloquintocet-mexyl") (S2-1), 1,3-dimethylbut-1-yl (5-chloro-8-quinolinoxy)acetate (S2-2), 4-allyloxybutyl (5-chloro-8-quinolinoxy)acetate (S2-3), 1-allyloxyprop-2-yl (5-chloro-8-quinolinoxy)acetate (S2-4), ethyl (5-chloro-8-quinolinoxy)acetate (S2-5), methyl 5-chloro-8-quinolinoxyacetate (S2-6), allyl (5-chloro-8-quinolinoxy)acetate (S2-7), 2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86 750, EP-A-94 349 and EP-A-191 736 or EP-A-0 492 366, and also (5-chloro-8-quinolinoxy)acetic acid (S2-10), hydrates and salts thereof, for example the lithium, sodium, potassium, calcium, magnesium, aluminium, iron, ammonium, quaternary ammonium, sulfonium or phosphonium salts thereof, as described in WO-A-2002/34048;
   s2^{b}) Compounds of the (5-chloro-8-quinolinoxy)malonic acid type (S2^{b}), preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds, as described in EP-A-0 582 198.
s3) Active ingredients of the dichloroacetamide type (S3), which are frequently used as pre-emergence safeners (soil-acting safeners), for example
   "dichlormid" (N,N-diallyl-2,2-dichloroacetamide) (S3-1),
   "R-29148" (3-dichloroacetyl-2,2,5-trimethyl-1,3-oxazolidine) from Stauffer (S3-2),
   "R-28725" (3-dichloroacetyl-2,2-dimethyl-1,3-oxazolidine) from Stauffer (S3-3),
   "benoxacor" (4-dichloroacetyl-3,4-dihydro-3-methyl-2H-1,4-benzoxazine) (S3-4),
   "PPG-1292" (N-allyl-N-[(1,3-dioxolan-2-yl)methyl]dichloroacetamide) from PPG Industries (S3-5),
   "DKA-24" (N-allyl-N-[(allylaminocarbonyl)methyl]dichloroacetamide) from Sagro-Chem (S3-6),
   "AD-67" or "MON 4660" (3-dichloroacetyl-1-oxa-3-azaspiro[4.5]decane) from Nitrokemia or Monsanto (S3-7),
   "TI-35" (1-dichloroacetylazepane) from TRI-Chemical RT (S3-8),
   "Diclonon" (Dicyclonon) or "BAS145138" or "LAB145138" (S3-9)
   ((RS)-1-dichloroacetyl-3,3,8a-trimethylperhydropyrrolo[1,2-a]pyrimidin-6-one) from BASF,
   "furilazole" or "MON 13900" ((RS)-3-dichloroacetyl-5-(2-furyl)-2,2-dimethyloxazolidine) (S3-10), and the (R) isomer thereof (S3-11).
s4) Compounds from the class of the acylsulfonamides (S4):
   s4^{a}) N-Acylsulfonamides of the formula (S4^{a}) and salts thereof, as described in WO-A-97/45016, 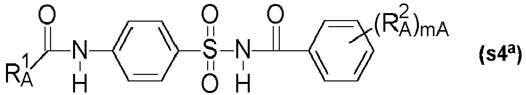 in which
      R_{A}¹ is (C₁-C₆alkyl, (C₃-C₆)cycloalkyl, cycloalkyl, where the 2 latter radicals are substituted by v_{A} substituents from the group of halogen, (C₁-C₄)alkoxy, (C₁-C₆)haloalkoxy and (C₁-C₄)alkylthio and, in the case of cyclic radicals, also by (C₁-C₄)alkyl and (C₁-C₄)haloalkyl;
      R_{A}² is halogen, (C₁-C₄)alkyl, (C₁-C₄)alkoxy, CF₃;
      m_{A} is 1 or 2;
      v_{A} is 0, 1, 2 or 3;
   s4^{b}) Compounds of the 4-(benzoylsulfamoyl)benzamide type of the formula (S4^{b}) and salts thereof, as described in WO-A-99/16744, 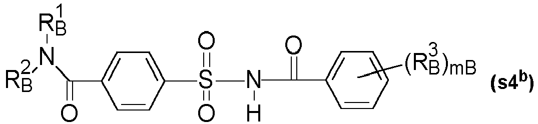 in which
      - R_{B}¹, R_{B}²: are independently hydrogen, (C₁-C₆)alkyl, (C₃-C₆)cycloalkyl, (C₃-C₆)alkenyl, (C₃-C₆)alkynyl,
      - R_{B}³: is halogen, (C₁-C₄)alkyl, (C₁-C₄)haloalkyl or (C₁-C₄)alkoxy and
      - m_{B}: is 1 or 2,
      for example those in which
      R_{B}¹ = cyclopropyl, R_{B}² = hydrogen and (R_{B}³) = 2-OMe ("cyprosulfamide", S4-1),
      R_{B}¹ = cyclopropyl, R_{B}² = hydrogen and (R_{B}³) = 5-Cl-2-OMe (S4-2),
      R_{B}¹ = ethyl, R_{B}² = hydrogen and (R_{B}³) = 2-OMe (S4-3),
      R_{B}¹ = isopropyl, R_{B}² = hydrogen and (R_{B}³) = 5-Cl-2-OMe (S4-4) and
      R_{B}¹ = isopropyl, R_{B}² = hydrogen and (R_{B}³) = 2-OMe (S4-5);
   s4^{c}) Compounds from the class of the benzoylsulfamoylphenylureas of the formula (S4^{c}), as described in EP-A-365484, 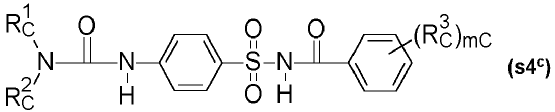 in which
      - R_{C}¹, R_{C}²: are independently hydrogen, (C₁-C₈)alkyl, (C₃-C₈)cycloalkyl, (C₃-C₆)alkenyl, (C₃-C₆)alkynyl,
      - R_{C}³: is halogen, (C₁-C₄)alkyl, (C₁-C₄)alkoxy, CF₃ and
      - m_{C}: is 1 or 2;
      for example
      1-[4-(N-2-methoxybenzoylsulfamoyl)phenyl]-3-methylurea,
      1-[4-(N-2-methoxybenzoylsulfarnoyl)phenyl]-3,3-dimethylurea,
      1-[4-(N-4,5-dimethylbenzoylsulfamoyl)phenyl]-3-methylurea;
   s4^{d}) Compounds of the N-phenylsulfonylterephthalamide type of the formula (S4^{d}) and salts thereof, which are known, for example, from CN 101838227, 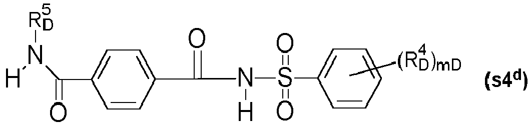 in which
      - R_{D}⁴: is halogen, (C₁-C₄)-alkyl, (C₁-C₄)-alkoxy, CF₃;
      - m_{D}: is 1 or 2;
      - R_{D}⁵: is hydrogen, (C₁-C₆)-alkyl, (C₃-C₆)-cycloalkyl, (C₂-C₆)-alkenyl, (C₂-C₆)-alkynyl or (C₅-C₆)-cycloalkenyl.
s5) Active ingredients from the class of the hydroxyaromatics and the aromatic-aliphatic carboxylic acid derivatives (S5), for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicyclic acid, 2-hydroxycinnamic acid, 2,4-dichlorocinnamic acid, as described in WO-A-2004/084631, WO-A-2005/015994, WO-A-2005/016001.
s6) Active ingredients from the class of the 1,2-dihydroquinoxalin-2-ones (S6), for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylaminoethyl)-3-(2-thienyl)-1,2-dihydroquinoxalin-2-one, as described in WO-A-2005/112630.
s7) Compounds from the class of the diphenylmethoxyacetic acid derivatives (S7), for example methyl diphenylmethoxyacetate (CAS Reg. No. 41858-19-9) (S7-1), ethyl diphenylmethoxyacetate or diphenylmethoxyacetic acid, as described in WO-A-98/38856.
s8) Compounds of the formula (S8), as described in WO-A-98/27049, 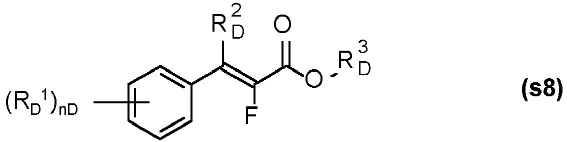 in which the symbols and indices are defined as follows:
   - R_{D}¹: is halogen, (C₁-C₄)-alkyl, (C₁-C₄)-haloalkyl, (C₁-C₄)-alkoxy, (C₁-C₄)-haloalkoxy,
   - R_{D}²: is hydrogen or (C₁-C₄)-alkyl,
   - R_{D}³: is hydrogen, (C₁-C₈)-alkyl, (C₂-C₄)-alkenyl, (C₂-C₄)-alkynyl or aryl, where each of the aforementioned carbon-containing radicals is unsubstituted or substituted by one or more, preferably up to three identical or different radicals from the group consisting of halogen and alkoxy; or salts thereof,
   - n_{D}: is an integer from 0 to 2.
s9) Active ingredients from the class of the 3-(5-tetrazolylcarbonyl)-2-quinolones (S9), for example 1,2-dihydro-4-hydroxy-1-ethyl-3-(5-tetrazolylcarbonyl)-2-quinolone (CAS Reg. No.: 219479-18-2), 1,2-dihydro-4-hydroxy-1-methyl-3-(5-tetrazolylcarbonyl)-2-quinolone (CAS Reg. No. 95855-00-8), as described in WO-A-1999/000020.
s10) Compounds of the formula (S10^{a}) or (S10^{b})
   as described in WO-A-2007/023719 and WO-A-2007/023764, 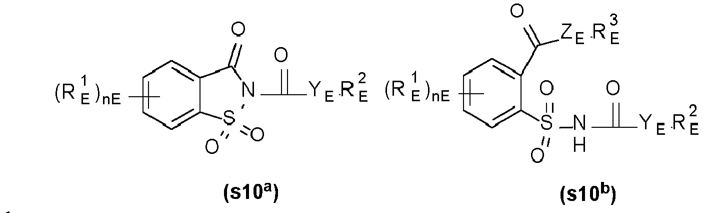 in which
   - R_{E}¹: is halogen, (C₁-C₄)-alkyl, methoxy, nitro, cyano, CF₃, OCF₃
   - Y_{E}, Z_{E}: are independently O or S,
   - n_{E}: is an integer from 0 to 4,
   - R_{E}²: is (C₁-C₁₆)-alkyl, (C₂-C₆)-alkenyl, (C₃-C₆)-cycloalkyl, aryl; benzyl, halobenzyl,
   - R_{E}³: is hydrogen or (C₁-C₆)-alkyl.
s11) Active ingredients of the oxyimino compound type (S11), which are known as seed-dressing agents, for example
   "oxabetrinil" ((Z)-1,3-dioxolan-2-ylmethoxyimino(phenyl)acetonitrile) (S11-1), which is known as a seed-dressing safener for millet/sorghum against metolachlor damage,
   "fluxofenim" (1-(4-chlorophenyl)-2,2,2-trifluoro-1-ethanone O-(1,3-dioxolan-2-ylmethyl)oxime) (S11-2), which is known as a seed-dressing safener for millet/sorghum against metolachlor damage, and
   "cyometrinil" or "CGA-43089" ((Z)-cyanomethoxyimino(phenyl)acetonitrile) (S11-3), which is known as a seed-dressing safener for millet/sorghum against metolachlor damage.
s12) Active ingredients from the class of the isothiochromanones (S12), for example methyl [(3-oxo-1H-2-benzothiopyran-4(3H)-ylidene)methoxy]acetate (CAS Reg. No. 205121-04-6) (S12-1) and related compounds from WO-A-1998/13361.
s13) One or more compounds from group (S13):
   "naphthalic anhydride" (1,8-naphthalenedicarboxylic anhydride) (S13-1), which is known as a seed-dressing safener for corn against thiocarbamate herbicide damage,
   "fenclorim" (4,6-dichloro-2-phenylpyrimidine) (S13-2), which is known as a safener for pretilachlor in sown rice,
   "flurazole" (benzyl 2-chloro-4-trifluoromethyl-1,3-thiazole-5-carboxylate) (S13-3), which is known as a seed-dressing safener for millet/sorghum against alachlor and metolachlor damage,
   "CL 304415" (CAS Reg. No. 31541-57-8)
   (4-carboxy-3,4-dihydro-2H-1-benzopyran-4-acetic acid) (S13-4) from American Cyanamid, which is known as a safener for corn against damage by imidazolinones,
   "MG 191" (CAS Reg. No. 96420-72-3) (2-dichloromethyl-2-methyl-1,3-dioxolane) (S13-5) from Nitrokemia, which is known as a safener for corn,
   "MG 838" (CAS Reg. No. 133993-74-5)
   (2-propenyl 1-oxa-4-azaspiro[4.5]decane-4-carbodithioate) (S13-6) from Nitrokemia
   "disulfoton" (O,O-diethyl S-2-ethylthioethyl phosphorodithioate) (S13-7),
   "dietholate" (O,O-diethyl O-phenyl phosphorothioate) (S13-8),
   "mephenate" (4-chlorophenyl methylcarbamate) (S13-9).
s14) Active ingredients which, in addition to herbicidal action against weeds, also have safener action on crop plants such as rice, for example
   "dimepiperate" or "MY-93" (S-1-methyl 1-phenylethylpiperidine-1-carbothioate), which is known as a safener for rice against damage by the herbicide molinate,
   "daimuron" or "SK 23" (1-(1-methyl-1-phenylethyl)-3-p-tolylurea), which is known as safener for rice against imazosulfuron herbicide damage,
   "cumyluron" = "JC-940" (3-(2-chlorophenylmethyl)-1-(1-methyl-1-phenylethyl)urea, see JP-A-60087254), which is known as safener for rice against damage by some herbicides,
   "methoxyphenone" or "NK 049" (3,3'-dimethyl-4-methoxybenzophenone), which is known as a safener for rice against damage by some herbicides,
   "CSB" (1-bromo-4-(chloromethylsulfonyl)benzene) from Kumiai, (CAS Reg. No. 54091-06-4), which is known as a safener against damage by some herbicides in rice.
s15) Compounds of the formula (S15) or tautomers thereof 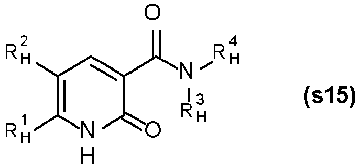 as described in WO-A-2008/131861 and WO-A-2008/131860
   in which
   - R_{H}¹: is a (C₁-C₆)-haloalkyl radical and
   - R_{H}²: is hydrogen or halogen and
   - R_{H}³, R_{H}⁴: are each independently hydrogen, (C₁-C₁₆)-alkyl, (C₂-C₁₆)-alkenyl or (C₂-C₁₆)-alkynyl,
   where each of the 3 latter radicals is unsubstituted or substituted by one or more radicals from the group of halogen, hydroxyl, cyano, (C₁-C₄)-alkoxy, (C₁-C₄)-haloalkoxy, (C₁-C₄)-alkylthio, (C₁-C₄)-alkylamino, di[(C₁-C₄)-alkyl]amino, [(C₁-C₄)-alkoxy]carbonyl, [(C₁-C₄)-haloalkoxy]carbonyl, (C₃-C₆)-cycloalkyl which is unsubstituted or substituted, phenyl which is unsubstituted or substituted, and heterocyclyl which is unsubstituted or substituted,
   or (C₃-C₆)-cycloalkyl, (C₄-C₆)-cycloalkenyl, (C₃-C₆)-cycloalkyl fused on one side of the ring to a 4 to 6-membered saturated or unsaturated carbocyclic ring, or (C₄-C₆)-cycloalkenyl fused on one side of the ring to a 4 to 6-membered saturated or unsaturated carbocyclic ring,
   where each of the 4 latter radicals is unsubstituted or substituted by one or more radicals from the group of halogen, hydroxyl, cyano, (C₁-C₄)alkyl, (C₁-C₄)haloalkyl, (C₁-C₄)alkoxy, (C₁-C₄)haloalkoxy, (C₁-C₄)alkylthio, (C₁-C₄)alkylamino, di[(C₁-C₄)alkyl]amino, [(C₁-C₄)alkoxy]carbonyl, [(C₁-C₄)haloalkoxy]carbonyl, (C₃-C₆)cycloalkyl which is unsubstituted or substituted, phenyl which is unsubstituted or substituted, and heterocyclyl which is unsubstituted or substituted, or
   - R_{H}³: is (C₁-C₄)-alkoxy, (C₂-C₄)-alkenyloxy, (C₂-C₆)-alkynyloxy or (C₂-C₄)-haloalkoxy and
   - R_{H}⁴: is hydrogen or (C₁-C₄)-alkyl or
   - R_{H}³ and R_{H}⁴: together with the directly bonded nitrogen atom are a four- to eight-membered heterocyclic ring which, as well as the nitrogen atom, may also contain further ring heteroatoms, preferably up to two further ring heteroatoms from the group of N, O and S, and which is unsubstituted or substituted by one or more radicals from the group of halogen, cyano, nitro, (C₁-C₄)alkyl, (C₁-C₄)haloalkyl, (C₁-C₄)alkoxy, (C₁-C₄)haloalkoxy and (C₁-C₄)alkylthio.
s16) Active ingredients which are used primarily as herbicides but also have safener action on crop plants, for example
   (2,4-dichlorophenoxy)acetic acid (2,4-D),
   (4-chlorophenoxy)acetic acid,
   (R,S)-2-(4-chloro-o-tolyloxy)propionic acid (mecoprop),
   4-(2,4-dichlorophenoxy)butyric acid (2,4-DB),
   (4-chloro-o-tolyloxy)acetic acid (MCPA),
   4-(4-chloro-o-tolyloxy)butyric acid,
   4-(4-chlorophenoxy)butyric acid,
   3,6-dichloro-2-methoxybenzoic acid (dicamba),
   1-(ethoxycarbonyl)ethyl 3,6-dichloro-2-methoxybenzoate (lactidichlor-ethyl).

Preferred safeners s) are selected from the group of isoxadifen-ethyl, cyprosulfamide, cloquintocet-mexyl and mefenpyr-diethyl. Particular preference is given to mefenpyr-diethyl and cloquintocet-mexyl. Very particular preference is given to mefenpyr-diethyl.

Particular preference is given to active herbicidal ingredients c) selected from the group of:
flufenacet, prosulfocarb, pendimethalin, diflufenican, aclonifen, metribuzin, pyroxasulfone, propoxycarbazone, thiencarbazone-methyl, fenoxaprop, bromoxynil, halauxifen-methyl, 2,4-D, MCPA.

Very particular preference is given to the active herbicidal ingredients c) flufenacet, pyroxasulfone, diflufenican.

Particular preference is also given to mixtures of one or more active herbicidal ingredients c) selected from the group of:
flufenacet and pethoxamid; flufenacet and aclonifen; flufenacet and metribuzin; flufenacet and halauxifen-methyl; prosulfocarb and diflufenican; prosulfocarb and aclonifen; prosulfocarb and metribuzin; prosulfocarb and flufenacet; prosulfocarb and halauxifen-methyl; pendimethalin and diflufenican; pendimethalin and aclonifen; pendimethalin and metribuzin; pendimethalin and halauxifen-methyl; metribuzin and diflufenican; halauxifen-methyl and diflufenican; flufenacet and diflufenican; metribuzin and aclonifen, halauxifen-methyl and aclonifen; pyroxasulfone and diflufenican; aclonifen and diflufenican; pyroxasulfone and prosulfocarb; pyroxasulfone and aclonifen; pyroxasulfone and metribuzin; pyroxasulfone and flufenacet; pyroxasulfone and halauxifen-methyl or flufenacet and pyroxasulfone and dilflufenican; aclonifen and diflufenican and flufenacet; metribuzin and diflufenican and flufenacet.

The mixtures are most preferably selected from: flufenacet and diflufenican; flufenacet and pyroxasulfone; aclonifen and diflufenican; metribuzin and diflufenican; flufenacet and aclonifen; flufenacet and metribuzin; flufenacet and pyroxasulfone and dilflufenican; aclonifen and diflufenican and flufenacet; metribuzin and diflufenican and flufenacet.

The active herbicidal ingredients c) mentioned and mixtures thereof may likewise be used with a safener s) selected from the group of isoxadifen-ethyl, cyprosulfamide, cloquintocet-mexyl and mefenpyr-diethyl.

Most preferably, the mixtures comprising c) and s) are selected from: 2-[(2,4-dichlorophenyl)methyl]-4,4'-dimethyl-3-isoxazolidinone (CAS Number 81777-95-9 or IPUAC 2-(2,4-dichlorobenzyl)-4,4-dimethyl-1,2-oxazolidin-3-one, Cinmethylin, flufenacet and diflufenican and mefenpyr-diethyl; flufenacet and diflufenican and cloquintocet-mexyl, aclonifen and diflufenican and mefenpyr-diethyl; pyroxasulfone and mefenpyr-diethyl.

Examples of fungicides as compound c) are:
1) Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4 triazol-1-yl)butan-2-ol, (1.029) (2R)-2-(1-chlorocyclopropyl)-4-[(1S)-2,2-dichlorocyclopropyl]-1-(1H-1,2,4 triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4 triazol-1-yl)butan-2-ol, (1.032) (2S)-2-(1-chlorocyclopropyl)-4-[(1S)-2,2-dichlorocyclopropyl]-1-(1H-1,2,4 triazol-1-yl)butan-2-ol, (1.033) (2S)-2-[4-(4-chlorophenoxy)-2-(trifluoromethyl)phenyl]-1-(1H-1,2,4 triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3 -thione, (1.05 0) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4 triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-l-yl)pentan-2-ol, (1.055) Mefentrifluconazole, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidofonnamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]-phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-14-[(4,5-dichloro-1,3-thiazol-2-yl)oxy]-2,5-dimethylphenyl}-N-ethyl-N-methylimidofonnamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropyl-cyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) ipfentrifluconazole, (1.082) 2-[4-(4-chlorophenoxy)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxy-propyl]imidazole-4-carbonitrile and (1.086) 4-[[6-[rac-(2R)-2-(2,4-difluorophenyl)-1,1-difluoro-2-hydroxy-3-(5-thioxo-4H-1,2,4-triazol-1-yl)propyl] -3 -pyridyl]oxy]benzonitrile.
2) Inhibitors of the respiratory chain at complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028)inpyrfluxam, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fluoro-1-methyl-1H-pyrazole-4-carboxamide, (2.038) isoflucypram, (2.039) N-[(1R,4S)-9-(dichloromethylene)-1,2,3,4-tetrahydro-l,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5 -yl] -3 -(difluoromethyl)-1-methyl- 1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxarnide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5-fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide, (2.057) pyrapropoyne.
3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{[1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2-[(2,5-dimethylphenoxy)methyl]phenyl}-2-methoxy-N-methylacetamide, (3.025)fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate, (3.030) metyltetraprole, (3.031) florylpicoxamid.
4) Inhibitors of the mitosis and cell division, for example (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) 3-chloro-4-(2,6-difluorophenyl)-6-methyl-5-phenylpyridazine, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl- 1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-amine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile.
6) Compounds capable to induce a host defence, for example (6.001) acibenzolar-S-methyl, (6.002) isotianil, (6.003) probenazole, (6.004) tiadinil.
7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinolone.
8) Inhibitors of the ATP production, for example (8.001) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.
10) Inhibitors of the lipid and membrane synthesis, for example (10.001) propamocarb, (10.002) propamocarb hydrochloride, (10.003) tolclofos-methyl.
11) Inhibitors of the melanin biosynthesis, for example (11.001) tricyclazole, (11.002) tolprocarb.
12) Inhibitors of the nucleic acid synthesis, for example (12.001) benalaxyl, (12.002) benalaxyl-M (kiralaxyl), (12.003) metalaxyl, (12.004) metalaxyl-M (mefenoxam).
13) Inhibitors of the signal transduction, for example (13.001) fludioxonil, (13.002) iprodione, (13.003) procymidone, (13.004) proquinazid, (13.005) quinoxyfen, (13.006) vinclozolin.
14) Compounds capable to act as an uncoupler, for example (14.001) fluazinam, (14.002) meptyldinocap.
15) Other fungicides, for example (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) Oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5 S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) Ipflufenoquin, (15.042) 2-{2-fluoro-6-[(8-fluoro-2-methylquinolin-3-yl)oxy]phenyl}propan-2-ol, (15.043)fluoxapiprolin, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15 .062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimidoformamide), (15.065) (N'-(2-chloro-5-methyl-4-phenoxyphenyl)-N-ethyl-N-methylimidoformamide), (15.066) (2-{2-[(7,8-difluoro-2-methylquinolin-3-yl)oxy]-6-fluorophenyl}propan-2-ol), (15.067) (5-bromo-1-(5,6-dimethylpyridin-3-yl)-3,3-dimethyl-3,4-dihydroisoquinoline), (15.068) (3-(4,4-difluoro-5,5 -dimethyl-4,5 -dihydrothieno [2,3 -c]pyridin-7-yl)quinoline), (15 .069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3-(4,4-difluoro-3,3-dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) (methyl{4-[5-(trifluoromethyl)-1,2,4-oxadiazol-3-yl]phenyl}carbamate), (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl]benzamide, (15.077) N-[(E)-methoxyiminomethyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4-[5-(trifluoromethyl)-1,2,4-oxadiazol-3-yl]phenyl]cyclopropanecarboxamide, (15.080) N-(2-fluorophenyl)-4-[5-(trifluoromethyl)-1,2,4-oxadiazol-3-yl]benzamide, (15.081) 2,2-difluoro-N-methyl-2-[4-[5-(trifluoromethyl)-1,2,4-oxadiazol-3-yl]phenyl]-acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoromethyl)-1,2,4-oxadiazol-3-yl]-benzamide, (15.084) N-[(Z)-N-methoxy-C-methyl-carbonimidoyl]-4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenyl]methyl]-propanamide, (15.086) 4,4-dimethyl-1-[[4-[5-(trifluoromethyl)-1,2,4-oxadiazol-3-yl]phenyl]methyl]-pyrrolidin-2-one, (15.087) N-methyl-4-[5-(trifluoromethyl)-l,2,4-oxadiazol-3-yl]benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15 .090) 1-methoxy-1-methyl-3-[[4-[5-(trifluoromethyl}-1,2,4-oxadiazol-3-yl]phenyl]-methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phenyl]methyl]propanamide, (15.093) N-methoxy-N-[[4-[5-(trifluoromethyl)-1,2,4-oxadiazol-3-yl]phenyl]methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]-propanamide, (15.097) N-ethyl-2-methyl-N-[[4-[5-(trifluoromethyl)-1,2,4-oxadiazol-3-yl)phenyl]methyl]-propanamide, (15.098) 1-methoxy-3-methyl-1-[[4-[5-(trifluoromethyl)-1,2,4-oxadiazol-3-yl]phenyl]-methyl]urea, (15.099) 1,3-dimethoxy-1-[[4-[5-(trifluoromethyl)-1,2,4-oxadiazol-3-yl]phenyl]methyl]urea, (15.100) 3 -ethyl-1-methoxy-1-[[4-[5 -(trifluoromethyl)-1,2,4-oxadiazol-3 -yl]phenyl]methyl]urea, (15.101) 1-[[4-[5-(trifluoromethyl)-1,2,4-oxadiazol-3-yl]phenyl]methyl]piperidin-2-one, (15.102) 4,4-dimethyl-2-[[4-[5-(trifluoromethyl)-1,2,4-oxadiazol-3-yl]phenyl]methyl]isooxazolidin-3-one, (15.103) 5,5-dimethyl-2-[[4-[5-(trifluoromethyl)-1,2,4-oxadiazol-3-yl]phenyl]methyl]isoxazolidin-3-one, (15.104) 3,3-dimethyl-1-[[4-[5-(trifluoromethyl)-1,2,4-oxadiazol-3-yl]phenyl]methyl]piperidin-2-one, (15.105) 1-[[3-fluoro-4-(5-(trifluoromethyl)-1,2,4-oxadiazol-3-yl]phenyl]methyl]azepan-2-one, (15.106) 4,4-dimethyl-2-[[4-(5-(trifluoromethyl)-1,2,4-oxadiazol-3-yl]phenyl]methyl]isoxazolidin-3-one (15.107) 5,5-dimethyl-2-[[4-[5-(trifluoromethyl)-1,2,4-oxadiazol-3-yl]phenyl]methyl]isoxazolidin-3-one, (15.108) ethyl (1-{4-[5-(trifluoromethyl)-1,2,4-oxadiazol-3-yl]benzyl}-1H-pyrazol-4-yl)acetate, (15.109) N,N-dimethyl-1-{4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydroisoquinoline, (15 .115) 1-(5-(fluoromethyl)-6-methyl-pyridin-3-yl)-4,4-difluoro-3,3-dimethyl-3,4-dihydroisoquinoline and (15.116) 1-(6-(difluoromethyl)-5-methoxy-pyridin-3-yl)-4,4-difluoro-3,3-dimethyl-3,4-dihydroisoquinoline.

All named mixing partners of the classes (1) to (15) as described here above can be present in the form of the free compound or, if their functional groups enable this, an agrochemically active salt thereof.

Examples of Insecticides as compound c) are:
(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.
(2) GABA-gated chloride channel blockers, preferably cyclodiene-organochlorines selected from chlordane and endosulfan, or phenylpyrazoles (fiproles) selected from ethiprole and fipronil.
(3) Sodium channel modulators, preferably pyrethroids selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)-isomer)], tralomethrin and transfluthrin or DDT or methoxychlor.
(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolids selected from flupyradifurone, or mesoionics selected from triflumezopyrim.
(5) Nicotinic acetylcholine receptor (nAChR) allosteric modulators, preferably spinosyns selected from spinetoram and spinosad.
(6) Glutamate-gated chloride channel (GluCl) allosteric modulators, preferably avermectins/milbemycins selected from abamectin, emamectin benzoate, lepimectin and milbemectin.
(7) Juvenile hormone mimics, preferably juvenile hormone analogues selected from hydroprene, kinoprene and methoprene, or fenoxycarb or pyriproxyfen.
(8) Miscellaneous non-specific (multi-site) inhibitors, preferably alkyl halides selected from methyl bromide and other alkyl halides, or chloropicrine or sulphuryl fluoride or borax or tartar emetic or methyl isocyanate generators selected from diazomet and metam.
(9) Chordotonal organ TRPV channel modulators selected from pymetrozine and pyrifluquinazone.
(10) Mite growth inhibitors selected from clofentezine, hexythiazox, diflovidazin and etoxazole.
(11) Microbial disruptors of the insect gut membrane selected from *Bacillus thuringiensis* subspecies *israelensis, Bacillus sphaericus, Bacillus thuringiensis* subspecies *aizawai, Bacillus thuringiensis* subspecies *kurstaki, Bacillus thuringiensis* subspecies *tenebrionis,* and *B.t.* plant proteins selected from Cry1Ab, Cry1Ac, Cry1Fa, Cry1A.105, Cry2Ab, Vip3A, mCry3A, Cry3Ab, Cry3Bb and Cry34Ab1/35Ab1.
(12) Inhibitors of mitochondrial ATP synthase, preferably ATP disruptors selected from diafenthiuron, or organotin compounds selected from azocyclotin, cyhexatin and fenbutatin oxide, or propargite or tetradifon.
(13) Uncouplers of oxidative phosphorylation via disruption of the proton gradient selected from chlorfenapyr, DNOC and sulfluramid.
(14) Nicotinic acetylcholine receptor channel blockers selected from bensultap, cartap hydrochloride, thiocylam and thiosultap-sodium.
(15) Inhibitors of chitin biosynthesis, type 0, selected from bistrifluron, chlorfluazuron, diflubenzuron, flucycloxuron, flufenoxuron, hexaflumuron, lufenuron, novaluron, noviflumuron, teflubenzuron and triflumuron.
(16) Inhibitors of chitin biosynthesis, type 1 selected from buprofezin.
(17) Moulting disruptor (in particular for Diptera, i.e. dipterans) selected from cyromazine.
(18) Ecdysone receptor agonists selected from chromafenozide, halofenozide, methoxyfenozide and tebufenozide.
(19) Octopamine receptor agonists selected from amitraz.
(20) Mitochondrial complex III electron transport inhibitors selected from hydramethylnone, acequinocyl and fluacrypyrim.
(21) Mitochondrial complex I electron transport inhibitors, preferably METI acaricides selected from fenazaquin, fenpyroximate, pyrimidifen, pyridaben, tebufenpyrad and tolfenpyrad, or rotenone (Derris).
(22) Voltage-dependent sodium channel blockers selected from indoxacarb and metaflumizone.
(23) Inhibitors of acetyl CoA carboxylase, preferably tetronic and tetramic acid derivatives selected from spirodiclofen, spiromesifen and spirotetramat.
(24) Mitochondrial complex IV electron transport inhibitors, preferably phosphines selected from aluminium phosphide, calcium phosphide, phosphine and zinc phosphide, or cyanides selected from calcium cyanide, potassium cyanide and sodium cyanide.
(25) Mitochondrial complex II electron transport inhibitors, preferably *beta*-ketonitrile derivatives selected from cyenopyrafen and cyflumetofen, and carboxanilides selected from pyflubumide.
(28) Ryanodine receptor modulators, preferably diamides selected from chlorantraniliprole, cyantraniliprole and flubendiamide.
(29) Chordotonal organ Modulators (with undefined target site) selected from flonicamid.
(30) Further active compounds selected from Acynonapyr, Afidopyropen, Afoxolaner, Azadirachtin, Benclothiaz, Benzoximate, Benzpyrimoxan, Bifenazate, Broflanilide, Bromopropylate, Chinomethionat, Chloroprallethrin, Cryolite, Cyclaniliprole, Cycloxaprid, Cyhalodiamide, Dicloromezotiaz, Dicofol, Dimpropyridaz, epsilon-Metofluthrin, epsilon-Momfluthrin, Flometoquin, Fluazaindolizine, Fluensulfone, Flufenerim, Flufenoxystrobin, Flufiprole, Fluhexafon, Fluopyram, Flupyrimin, Fluralaner, Fluxametamide, Fufenozide, Guadipyr, Heptafluthrin, Imidaclothiz, Iprodione, Isocycloseram, kappa-Bifenthrin, kappa-Tefluthrin, Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprole, Tetrachlorantraniliprole, Tigolaner, Tioxazafen, Thiofluoximate iodomethane; furthermore preparations based on *Bacillus firmus* (1-1582, BioNeem, Votivo), and also the following compounds: 1-{2-fluoro-4-methyl-5-[(2,2,2-trifluoroethyl)sulphinyl]phenyl}-3-(trifluoromethyl)-1H-1,2,4-triazole-5-amine (known from WO2006/043635) (CAS 885026-50-6), {1'-[(2E)-3-(4-chlorophenyl)prop-2-en-1-yl]-5-fluorospiro[indol-3,4'-piperidin]-1(2H)-yl}(2-chloropyridin-4-yl)methanone (known from WO2003/106457) (CAS 637360-23-7), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3 -(4-chloro-2,6-dimethylphenyl)-8-methoxy-2-oxo-1,8-diazaspiro [4.5]dec-3 -en-4-yl ethyl carbonate (known from EP2647626) (CAS 1440516-42-6), 4-(but-2-yn-1-yloxy)-6-(3,5-dimethylpiperidin-1-yl)-5-fluoropyrimidine (known from WO2004/099160) (CAS 792914-58-0), PF1364 (known from JP2010/018586) (CAS 1204776-60-2), (3*E*)-3-[1-[(6-chloro-3-pyridyl)methyl]-2-pyridylidene]-1,1,1-trifluoro-propan-2-one (known from WO2013/144213) (CAS 1461743-15-6), *N*-[3-(benzylcarbamoyl)-4-chlorophenyl]-1-methyl-3-(pentafluoroethyl)-4-(trifluoromethyl)-1*H-*pyrazole-5-carboxamide (known from WO2010/051926) (CAS 1226889-14-0), 5-bromo-4-chloro-*N*-[4-chloro-2-methyl-6-(methylcarbainoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-*N*-(*trans*-1-oxido-3-thietanyl)-benzamide and 4-[(5*S*)-5-(3,5-dichlorophenyl)-4,5-dihydro-5-(trifluoromethyl)-3-isoxazolyl]-2-methyl-*N*-(*cis*-1-oxido-3-thietanyl)benzamide (known from WO 2013/050317 A1) (CAS 1332628-83-7), *N*-[3-chloro-1-(3-pyridinyl)-1*H-*pyrazol-4-yl]-*N-*ethyl-3-[(3,3,3-trifluoropropyl)sulfmyl]-propanamide, (+)-*N*-[3-chloro-1-(3-pyridinyl)-1*H-*pyrazol-4-yl]-*N*-ethyl-3-[(3,3,3-trifluoropropyl)sulfinyl]-propanamide and (-)-*N*-[3-chloro-1-(3-pyridinyl)-1*H-*pyrazol-4-yl]-*N-*ethyl-3-[(3,3,3-trifluoropropyl)sulfinyl]-propanamide (known from WO 2013/162715 A2, WO 2013/162716 A2, US 2014/0213448 A1) (CAS 1477923-37-7), 5-[[(2*E*)-3-chloro-2-propen-1-yl]amino]-1-[2,6-dichloro-4-(trifluoromethyl)phenyl]-4-[(trifluoromethyl)sulfinyl]-1*H*-pyrazole-3-carbonitrile (known from CN 101337937 A) (CAS 1105672-77-2), 3-bromo-*N*-[4-chloro-2-methyl-6-[(methylamino)thioxomethyl]phenyl]-1-(3-chloro-2-pyridinyl)-1*H*-pyrazole-5-carboxamide, (Liudaibenjiaxuanan, known from CN 103109816 A) (CAS 1232543-85-9); *N*-[4-chloro-2-[[(1,1-dimethylethyl) amino]carbonyl]-6-methylphenyl]-1-(3-chloro-2-pyridinyl)-3-(fluoromethoxy)-1*H*-pyrazole-5-carboxamide (known from WO 2012/034403 A1) (CAS 1268277-22-0), *N*-[2-(5-amino-1,3,4-thiadiazol-2-yl)-4-chloro-6-methylphenyl]-3-bromo-1-(3-chloro-2-pyridinyl)-1*H-*pyrazole-5-carboxamide (known from WO 2011/085575 A1) (CAS 1233882-22-8), 4-[3-[2,6-dichloro-4-[(3,3-dichloro-2-propen-1-yl)oxy]phenoxy] propoxy]-2-methoxy-6-(trifluoromethyl)-pyrimidine (known from CN 101337940 A) (CAS 1108184-52-6); (2*E*)- and 2(*Z*)-2-[2-(4-cyanophenyl)-1-[3-(trifluoromethyl)phenyl]ethylidene]-*N*-[4-(difluoromethoxy)phenyl] - hydrazinecarboxamide (known from CN 101715774 A) (CAS 1232543-85-9); 3-(2,2-dichloroethenyl)-2,2-dimethyl-4-(1*H*-benzimidazol-2-yl)phenyl-cyclopropanecarboxylic acid ester (known from CN 103524422 A) (CAS 1542271-46-4); (4a*S*)-7-chloro-2,5-dihydro-2-[[(methoxycarbonyl)[4-[(trifluoromethyl)thio]phenyl] amino]carbonyl]-indeno[1,2-*e*][1,3,4]oxadiazine-4a(3*H*)-carboxylic acid methyl ester (known from CN 102391261 A) (CAS 1370358-69-2); 6-deoxy-3-*O*-ethyl-2,4-di-*O*-methyl-, 1-[*N*-[4-[1-[4-(1,1,2,2,2-pentafluoroethoxy)phenyl]-1*H*-1,2,4-triazol-3-yl]phenyl]carbamate]-α-L-mannopyranose (known from US 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1]octane (CAS 1253850-56-4), (8*-anti*)-8-(2-cyclopropylmethoxy-4-trifluoromethyl-phenoxy)-3-(6-trifluoromethyl-pyridazin-3-yl)-3-aza-bicyclo[3.2.1] octane (CAS 933798-27-7), (8-*syn*)-8-(2-cyclopropylmethoxy-4-trifluoromethyl-phenoxy)-3-(6-trifluoromethyl-pyridazin-3-yl)-3-aza-bicyclo[3.2.1]octane (known from WO 2007040280 A1, WO 2007040282 A1) (CAS 934001-66-8), N-[3-chloro-1-(3-pyridinyl)-1H-pyrazol-4-yl]-N-ethyl-3-[(3,3,3-trifluoropropyl)thio]-propanamide (known from WO 2015/058021 A1, WO 2015/058028 A1) (CAS 1477919-27-9) and N-[4-(aminothioxomethyl)-2-methyl-6-[(methylamino)carbonyl]phenyl]-3-bromo-1-(3-chloro-2-pyridinyl)-1*H-*pyrazole-5-carboxamide (known from CN 103265527 A) (CAS 1452877-50-7), 5-(1,3-dioxan-2-yl)-4-[[4-(trifluoromethyl)phenyl]methoxy]-pyrimidine (known from WO 2013/115391 A1) (CAS 1449021-97-9), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2,6-dimethylphenyl)-8-methoxy-1-methyl-2-oxo-1,8-diazaspiro[4.5]dec-3-en-4-yl-carbonic acid ethyl ester (known from WO 2010/066780 A1, WO 2011151146 A1) (CAS 1229023-00-0), 4-[(5S)-5-(3,5-dichloro-4-fluorophenyl)-4,5-dihydro-5-(trifluoromethyl)-3-isoxazolyl]-N-[(4R)-2-ethyl-3-oxo-4-isoxazolidinyl]-2-methyl-benzamide (known from WO 2011/067272, WO2013/050302) (CAS 1309959-62-3).

Biologics: Biological spores might be added to the formulation or be encapsulated as well.

The capsule suspension concentrates according to the invention are of excellent suitability for application of the active agrochemical ingredients present to plants and/or the habitat thereof. They ensure the release of the active components in the respective desired amount over a relatively long period of time.

The capsule suspension concentrates according to the invention can be used in practice either as such or after dilution with water. Application is effected by customary methods, i.e., for example by pouring or spraying.

The application rate of capsule suspension concentrates according to the invention may be varied within a relatively wide range. It is guided by the active agrochemical ingredients in question and by the content thereof in the microcapsule formulations.

A preferred use of the capsule suspension concentrates according to the invention is as a herbicide in cereals and oilseed rape, most preferably in winter barley and in this context in a pre-emergence method and in a post-emergence method. Preference is therefore given to use in an autumn application shortly after the sowing of the cereal and shortly before or shortly after germination of the weeds and in particular weed grasses.

The capsule suspension concentrates according to the invention can be produced by known processes, for example as mixed formulations of the individual components, optionally with further active ingredients, additives and/or customary formulation auxiliaries, and these are then applied in a customary manner diluted with water, or as tankmixes by joint dilution of the separately formulated or partly separately formulated individual components with water. Likewise possible is the application at different times (split application) of the separately formulated or partly separately formulated individual components. It is also possible to apply the individual components or the capsule suspension concentrates according to the invention in a plurality of portions (sequential application), for example by pre-emergence applications followed by post-emergence applications or by early post-emergence applications followed by medium or late post-emergence applications. Preference is given to the joint or immediately successive application of the active ingredients in the respective combination.

Accordingly the present invention further provides a method of controlling unwanted plants in plant crops, which is characterized in that the capsule suspension concentrates according to the invention are deployed on the plants (for example harmful plants such as mono- or dicotyledonous weeds or unwanted crop plants) or the area on which the plants grow.

Unwanted plants are understood to mean all plants which grow at sites where they are unwanted. These can be, for example, harmful plants (e.g. mono- or dicotyledonous weeds or unwanted crop plants).

Monocotyledonous weeds come, for example, from the genera: *Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, and Sorghum.*

Dicotyledonous weeds come, for example, from the genera *Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola and Xanthium.*

Preferably, the capsule suspension concentrates according to the invention are used to control the weed of the *Alopecurus myosuroides* species HUDS (or black grass).

The invention also provides for the use of the capsule suspension concentrates according to the invention for control of unwanted plant growth, preferably in crops of useful plants.

If the capsule suspension concentrates according to the invention are applied to the soil surface before germination, either the emergence of the weed seedlings is prevented completely or the weeds grow until they have reached the cotyledon stage, but then they stop growing and ultimately die completely after three to four weeks have passed.

When the capsule suspension concentrates according to the invention compositions are applied post-emergence to the green parts of the plants, growth likewise stops rapidly a very short time after the treatment, and the weed plants remain at the growth stage at the time of application, or they die completely after a certain time, such that competition by the weeds, which is harmful to the crop plants, is thus eliminated very early and in a sustained manner.

The capsule suspension concentrates according to the invention are notable for a rapid onset and long duration of herbicidal action. Said properties and advantages are beneficial in practical weed control in order to keep agricultural crops clear of unwanted competing plants and hence to ensure and/or increase the yields in terms of quality and quantity. These novel compositions markedly exceed the technical state of the art with a view to the properties described.

Even though the capsule suspension concentrates according to the invention have excellent herbicidal activity against monocotyledonous and dicotyledonous weeds, there is only insignificant damage, if any, to crop plants of economically important crops, for example dicotyledonous crops such as soya, cotton, oilseed rape, sugar beet, or gramineous crops such as wheat, barley, rye, oats, millet/sorghum, rice or corn. For these reasons, the capsule suspension concentrates according to the invention are highly suitable for selective control of unwanted plant growth in agriculturally useful plants or in ornamental plants.

In addition, the capsule suspension concentrates according to the invention have excellent growth-regulatory properties in crop plants. They intervene in the plants' own metabolism with regulatory effect, and can thus be used for the controlled influencing of plant constituents and to facilitate harvesting, for example by triggering desiccation and stunted growth. In addition, they are also suitable for general control and inhibition of unwanted vegetative growth without killing the plants. Inhibition of vegetative growth plays a major role for many mono- and dicotyledonous crops since this can reduce or completely prevent lodging.

By virtue of their herbicidal and plant growth regulatory properties, the capsule suspension concentrates according to the invention can also be used to control harmful plants in crops of genetically modified plants which are known or are yet to be developed. In general, the transgenic plants are characterized by particular advantageous properties, for example by resistances to certain pesticides, in particular certain herbicides, resistances to plant diseases or pathogens of plant diseases, such as certain insects or microorganisms such as fungi, bacteria or viruses. Other specific characteristics relate, for example, to the harvested material with regard to quantity, quality, storability, composition and specific constituents. For instance, there are known transgenic plants with an elevated starch content or altered starch quality, or those with a different fatty acid composition in the harvested material.

Preference is given to the use of the capsule suspension concentrates according to the invention in economically important transgenic crops of useful and ornamental plants, for example of gramineous crops such as wheat, barley, rye, oats, millet/sorghum, rice, oilseed rape and maize. Preferably, the compositions according to the invention can be used as herbicides in crops of useful plants which are resistant, or have been made resistant by genetic engineering, to the phytotoxic effects of the herbicides. Particular preference is given to use on wheat, barley, rye and oilseed rape, preferably winter oilseed rape.

When the capsule suspension concentrates according to the invention are employed in transgenic crops, not only do the effects toward harmful plants observed in other crops occur, but frequently also effects which are specific to application in the particular transgenic crop, for example an altered or specifically widened spectrum of weeds which can be controlled, altered application rates which can be used for the application, preferably good combinability with the herbicides to which the transgenic crop is resistant, and influencing of growth and yield of the transgenic crop plants.

The present invention also further provides a method of controlling unwanted plant growth, preferably in crop plants such as cereals (e.g. wheat, barley, rye, oats, rice, corn, millet/sorghum), more preferably in monocotyledonous crops such as cereals, for example wheat, barley, rye, oats, crossbreeds thereof, such as triticale, rice, corn and millet/sorghum, wherein one or more capsule suspension concentrates according to the invention are applied to the harmful plants, plant parts, plant seeds or the area in which the plants grow, for example the area under cultivation in the. Preferably, the capsule suspension concentrates according to the invention are applied pre-emergence and post-emergence. More preferably pre-emergence.

The invention therefore also provides for the use of the capsule suspension concentrates according to the invention for control of harmful plants in transgenic crop plants.

The invention further preferably provides for the use of the capsule suspension concentrates according to the invention for treatment of plants where the seed has been treated with safener.

### Insecticides:

The capsule suspension concentrates according to the invention can preferably be used as insecticides. They are active against normally sensitive and resistant species and against all or some stages of development. The abovementioned pests include:
pests from the phylum of the Arthropoda, in particular from the class of the Arachnida, for example Acarus spp., for example Acarus siro, Aceria kuko, Aceria sheldoni, Aculops spp., Aculus spp., for example Aculus fockeui, Aculus schlechtendali, Amblyomma spp., Amphitetranychus viennensis, Argas spp., Boophilus spp., Brevipalpus spp., for example Brevipalpus phoenicis, Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp., for example Eotetranychus hicoriae, Epitrimerus pyri, Eutetranychus spp., for example Eutetranychus banksi, Eriophyes spp., for example Eriophyes pyri, Glycyphagus domesticus, Halotydeus destructor, Hemitarsonemus spp., for example Hemitarsonemus latus (=Polyphagotarsonemus latus), Hyalomma spp., Ixodes spp., Latrodectus spp., Loxosceles spp., Neutrombicula autumnalis, Nuphersa spp., Oligonychus spp., for example Oligonychus coffeae, Oligonychus coniferarum, Oligonychus ilicis, Oligonychus indicus, Oligonychus mangiferus, Oligonychus pratensis, Oligonychus punicae, Oligonychus yothersi, Ornithodorus spp., Ornithonyssus spp., Panonychus spp., for example Panonychus citri (=Metatetranychus citri), Panonychus ulmi (=Metatetranychus ulmi), Phyllocoptruta oleivora, Platytetranychus multidigituli, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp., for example Tarsonemus confusus, Tarsonemus pallidus, Tetranychus spp., for example Tetranychus canadensis, Tetranychus cinnabarinus, Tetranychus turkestani, Tetranychus urticae, Trombicula alfreddugesi, Vaejovis spp., Vasates lycopersici;
from the class of the Chilopoda, for example Geophilus spp., Scutigera spp.;
from the order or the class of the Collembola, for example Onychiurus armatus; Sminthurus viridis;
from the class of the Diplopoda, for example Blaniulus guttulatus;
from the class of the Insecta, for example from the order of the Blattodea, for example Blatta orientalis, Blattella asahinai, Blattella germanica, Leucophaea maderae, Loboptera decipiens, Neostylopyga rhombifolia, Panchlora spp., Parcoblatta spp., Periplaneta spp., for example Periplaneta americana, Periplaneta australasiae, Pycnoscelus surinamensis, Supella longipalpa;
from the order of the Coleoptera, for example Acalymma vittatum, Acanthoscelides obtectus, Adoretus spp., Aethina tumida, Agelastica alni, Agrilus spp., for example Agrilus planipennis, Agrilus coxalis, Agrilus bilineatus, Agrilus anxius, Agriotes spp., for example Agriotes linneatus, Agriotes mancus, Alphitobius diaperinus, Amphimallon solstitialis, Anobium punctatum, Anoplophora spp., for example Anoplophora glabripennis, Anthonomus spp., for example Anthonomus grandis, Anthrenus spp., Apion spp., Apogonia spp., Atomaria spp., for example Atomaria linearis, Attagenus spp., Baris caerulescens, Bruchidius obtectus, Bruchus spp., for example Bruchus pisorum, Bruchus rufimanus, Cassida spp., Cerotoma trifurcata, Ceutorrhynchus spp., for example Ceutorrhynchus assimilis, Ceutorrhynchus quadridens, Ceutorrhynchus rapae, Chaetocnema spp., for example Chaetocnema confinis, Chaetocnema denticulata, Chaetocnema ectypa, Cleonus mendicus, Conoderus spp., Cosmopolites spp., for example Cosmopolites sordidus, Costelytra zealandica, Ctenicera spp., Curculio spp., for example Curculio caryae, Curculio caryatrypes,Curculio obtusus, Curculio sayi, Cryptolestes ferrugineus, Cryptolestes pusillus, Cryptorhynchus lapathi, Cryptorhynchus mangiferae, Cylindrocopturus spp., Cylindrocopturus adspersus, Cylindrocopturus furnissi, Dendroctonus spp., for example Dendroctonus ponderosae, Dermestes spp., Diabrotica spp., for example Diabrotica balteata, Diabrotica barberi, Diabrotica undecimpunctata howardi, Diabrotica undecimpunctata undecimpunctata, Diabrotica virgifera virgifera, Diabrotica virgifera zeae, Dichocrocis spp., Dicladispa armigera, Diloboderus spp., Epicaerus spp., Epilachna spp., for example Epilachna borealis, Epilachna varivestis, Epitrix spp., for example Epitrix cucumeris, Epitrix fuscula, Epitrix hirtipennis, Epitrix subcrinita, Epitrix tuberis, Faustinus spp., Gibbium psylloides, Gnathocerus cornutus, Hellula undalis, Heteronychus arator, Heteronyx spp., Hylamorpha elegans, Hylotrupes bajulus, Hypera postica, Hypomeces squamosus, Hypothenemus spp., for example Hypothenemus hampei, Hypothenemus obscurus, Hypothenemus pubescens, Lachnostema consanguinea, Lasioderma serricorne, Latheticus oryzae, Lathridius spp., Lema spp., Leptinotarsa decemlineata, Leucoptera spp., for example Leucoptera coffeella, Limonius ectypus, Lissorhoptrus oryzophilus, Listronotus (= Hyperodes) spp., Lixus spp., Luperodes spp., Luperomorpha xanthodera, Lyctus spp., Megacyllene spp., for example Megacyllene robiniae, Megascelis spp., Melanotus spp., for example Melanotus longulus oregonensis, Meligethes aeneus, Melolontha spp., for example Melolontha melolontha, Migdolus spp., Monochamus spp., Naupactus xanthographus, Necrobia spp., Neogalerucella spp., Niptus hololeucus, Oryctes rhinoceros, Oryzaephilus surinamensis, Oryzaphagus oryzae, Otiorhynchus spp., for example Otiorhynchus cribricollis, Otiorhynchus ligustici, Otiorhynchus ovatus, Otiorhynchus rugosostriarus, Otiorhynchus sulcatus, Oulema spp., for example Oulema melanopus, Oulema oryzae, Oxycetonia jucunda, Phaedon cochleariae, Phyllophaga spp., Phyllophaga helleri, Phyllotreta spp., for example Phyllotreta armoraciae, Phyllotreta pusilla, Phyllotreta ramosa, Phyllotreta striolata, Popillia japonica, Premnotrypes spp., Prostephanus truncatus, Psylliodes spp., for example Psylliodes affinis, Psylliodes chrysocephala, Psylliodes punctulata, Ptinus spp., Rhizobius ventralis, Rhizopertha dominica, Rhynchophorus spp., Rhynchophorus ferrugineus, Rhynchophorus palmarum, Scolytus spp., for example Scolytus multistriatus, Sinoxylon perforans, Sitophilus spp., for example Sitophilus granarius, Sitophilus linearis, Sitophilus oryzae, Sitophilus zeamais, Sphenophorus spp., Stegobium paniceum, Sternechus spp., for example Sternechus paludatus, Symphyletes spp., Tanymecus spp., for example Tanymecus dilaticollis, Tanymecus indicus, Tanymecus palliatus, Tenebrio molitor, Tenebrioides mauretanicus, Tribolium spp., for example Tribolium audax, Tribolium castaneum, Tribolium confusum, Trogoderma spp., Tychius spp., Xylotrechus spp., Zabrus spp., for example Zabrus tenebrioides;
from the order of the Dermaptera, for example Anisolabis maritime, Forficula auricularia, Labidura riparia;
from the order of the Diptera, for example Aedes spp., for example Aedes aegypti, Aedes albopictus, Aedes sticticus, Aedes vexans, Agromyza spp., for example Agromyza frontella, Agromyza parvicornis, Anastrepha spp., Anopheles spp., for example Anopheles quadrimaculatus, Anopheles gambiae, Asphondylia spp., Bactrocera spp., for example Bactrocera cucurbitae, Bactrocera dorsalis, Bactrocera oleae, Bibio hortulanus, Calliphora erythrocephala, Calliphora vicina, Ceratitis capitata, Chironomus spp., Chrysomya spp., Chrysops spp., Chrysozona pluvialis, Cochliomya spp., Contarinia spp., for example Contarinia johnsoni, Contarinia nasturtii, Contarinia pyrivora, Contarinia schulzi, Contarinia sorghicola, Contarinia tritici,Cordylobia anthropophaga, Cricotopus sylvestris, Culex spp., for example Culex pipiens, Culex quinquefasciatus, Culicoides spp., Culiseta spp., Cuterebra spp., Dacus oleae, Dasineura spp., for example Dasineura brassicae, Delia spp., for example Delia antiqua, Delia coarctata, Delia florilega, Delia platura, Delia radicum, Dermatobia hominis, Drosophila spp., for example Drosphila melanogaster, Drosophila suzukii, Echinocnemus spp., Euleia heraclei, Fannia spp., Gasterophilus spp., Glossina spp., Haematopota spp., Hydrellia spp., Hydrellia griseola, Hylemya spp., Hippobosca spp., Hypoderma spp., Liriomyza spp., for example Liriomyza brassicae, Liriomyza huidobrensis, Liriomyza sativae, Lucilia spp., for example Lucilia cuprina, Lutzomyia spp., Mansonia spp., Musca spp., for example Musca domestica, Musca domestica vicina, Oestrus spp., Oscinella frit, Paratanytarsus spp., Paralauterborniella subcincta, Pegomya or Pegomyia spp., for example Pegomya betae, Pegomya hyoscyami, Pegomya rubivora, Phlebotomus spp., Phorbia spp., Phormia spp., Piophila casei, Platyparea poeciloptera, Prodiplosis spp., Psila rosae, Rhagoletis spp., for example Rhagoletis cingulata, Rhagoletis completa, Rhagoletis fausta, Rhagoletis indifferens, Rhagoletis mendax, Rhagoletis pomonella, Sarcophaga spp., Simulium spp., for example Simulium meridionale, Stomoxys spp., Tabanus spp., Tetanops spp., Tipula spp., for example Tipula paludosa, Tipula simplex, Toxotrypana curvicauda;
from the order of the Hemiptera, for example Acizzia acaciaebaileyanae, Acizzia dodonaeae, Acizzia uncatoides, Acrida turrita, Acyrthosipon spp., for example Acyrthosiphon pisum, Acrogonia spp., Aeneolamia spp., Agonoscena spp., Aleurocanthus spp., Aleyrodes proletella, Aleurolobus barodensis, Aleurothrixus floccosus, Allocaridara malayensis, Amrasca spp., for example Amrasca bigutulla, Amrasca devastans, Anuraphis cardui, Aonidiella spp., for example Aonidiella aurantii, Aonidiella citrina, Aonidiella inornata, Aphanostigma piri, Aphis spp., for example Aphis citricola, Aphis craccivora, Aphis fabae, Aphis forbesi, Aphis glycines, Aphis gossypii, Aphis hederae, Aphis illinoisensis, Aphis middletoni, Aphis nasturtii, Aphis nerii, Aphis pomi, Aphis spiraecola, Aphis viburniphila, Arboridia apicalis, Arytainilla spp., Aspidiella spp., Aspidiotus spp., for example Aspidiotus nerii, Atanus spp., Aulacorthum solani, Bemisia tabaci, Blastopsylla occidentalis, Boreioglycaspis melaleucae, Brachycaudus helichrysi, Brachycolus spp., Brevicoryne brassicae, Cacopsylla spp., for example Cacopsylla pyricola, Calligypona marginata, Capulinia spp., Carneocephala fulgida, Ceratovacuna lanigera, Cercopidae, Ceroplastes spp., Chaetosiphon fragaefolii, Chionaspis tegalensis, Chlorita onukii, Chondracris rosea, Chromaphis juglandicola, Chrysomphalus aonidum, Chrysomphalus ficus, Cicadulina mbila, Coccomytilus halli, Coccus spp., for example Coccus hesperidum, Coccus longulus, Coccus pseudomagnoliarum, Coccus viridis, Cryptomyzus ribis, Cryptoneossa spp., Ctenarytaina spp., Dalbulus spp., Dialeurodes chittendeni, Dialeurodes citri, Diaphorina citri, Diaspis spp., Diuraphis spp., Doralis spp., Drosicha spp., Dysaphis spp., for example Dysaphis apiifolia, Dysaphis plantaginea, Dysaphis tulipae, Dysmicoccus spp., Empoasca spp., for example Empoasca abrupta, Empoasca fabae, Empoasca maligna, Empoasca solana, Empoasca stevensi, Eriosoma spp., for example Eriosoma americanum, Eriosoma lanigerum, Eriosoma pyricola, Erythroneura spp., Eucalyptolyma spp., Euphyllura spp., Euscelis bilobatus, Ferrisia spp., Fiorinia spp., Furcaspis oceanica, Geococcus coffeae, Glycaspis spp., Heteropsylla cubana, Heteropsylla spinulosa, Homalodisca coagulata, Hyalopterus arundinis, Hyalopterus pruni, Icerya spp., for example Icerya purchasi, Idiocerus spp., Idioscopus spp., Laodelphax striatellus, Lecanium spp., for example Lecanium corni (=Parthenolecanium corni), Lepidosaphes spp., for example Lepidosaphes ulmi, Lipaphis erysimi, Lopholeucaspis japonica, Lycorma delicatula, Macrosiphum spp., for example Macrosiphum euphorbiae, Macrosiphum lilii, Macrosiphum rosae, Macrosteles facifrons, Mahanarva spp., Melanaphis sacchari, Metcalfiella spp., Metcalfa pruinosa, Metopolophium dirhodum, Monellia costalis, Monelliopsis pecanis, Myzus spp., for example Myzus ascalonicus, Myzus cerasi, Myzus ligustri, Myzus ornatus, Myzus persicae,. Myzus nicotianae, Nasonovia ribisnigri, Neomaskellia spp., Nephotettix spp., for example Nephotettix cincticeps,, Nephotettix nigropictus, Nettigoniclla spectra, Nilaparvata lugens, Oncometopia spp., Orthezia praelonga, Oxya chinensis, Pachypsylla spp., Parabemisia myricae, Paratrioza spp., for example Paratrioza cockerelli, Parlatoria spp., Pemphigus spp., for example Pemphigus bursarius, Pemphigus populivenae, Peregrinus maidis, Perkinsiella spp., Phenacoccus spp., for example Phenacoccus madeirensis, Phloeomyzus passerinii, Phorodon humuli, Phylloxera spp., for example Phylloxera devastatrix, Phylloxera notabilis, Pinnaspis aspidistrae, Planococcus spp., for example Planococcus citri, Prosopidopsylla flava, Protopulvinaria pyriformis, Pseudaulacaspis pentagona, Pseudococcus spp., for example Pseudococcus calceolariae, Pseudococcus comstocki, Pseudococcus longispinus, Pseudococcus maritimus, Pseudococcus viburni, Psyllopsis spp., Psylla spp., for example Psylla buxi, Psylla mali, Psylla pyri, Pteromalus spp., Pulvinaria spp., Pyrilla spp., Quadraspidiotus spp., for example Quadraspidiotus juglansregiae, Quadraspidiotus ostreaeformis, Quadraspidiotus perniciosus, Quesada gigas, Rastrococcus spp., Rhopalosiphum spp., for example Rhopalosiphum maidis, Rhopalosiphum oxyacanthae, Rhopalosiphum padi, Rhopalosiphum rufiabdominale, Saissetia spp., for example Saissetia coffeae, Saissetia miranda, Saissetia neglecta, Saissetia oleae, Scaphoideus titanus, Schizaphis graminum, Selenaspidus articulatus, Sipha flava, Sitobion avenae, Sogata spp., Sogatella furcifera, Sogatodes spp., Stictocephala festina, Siphoninus phillyreae, Tenalaphara malayensis,Tetragonocephela spp., Tinocallis caryaefoliae, Tomaspis spp., Toxoptera spp., for example Toxoptera aurantii, Toxoptera citricidus, Trialeurodes vaporariorum, Trioza spp., for example Trioza diospyri, Typhlocyba spp., Unaspis spp., Viteus vitifolii, Zygina spp.;
from the suborder of the Heteroptera, for example Aelia spp., Anasa tristis, Antestiopsis spp., Boisea spp., Blissus spp., Calocoris spp., Campylomma livida, Cavelerius spp., Cimex spp., for example Cimex adjunctus, Cimex hemipterus, Cimex lectularius, Cimex pilosellus, Collaria spp., Creontiades dilutus, Dasynus piperis, Dichelops furcatus, Diconocoris hewetti, Dysdercus spp., Euschistus spp., for example Euschistus heros, Euschistus servus, Euschistus tristigmus, Euschistus variolarius, Eurydema spp., Eurygaster spp., Halyomorpha halys, Heliopeltis spp., Horcias nobilellus, Leptocorisa spp., Leptocorisa varicornis, Leptoglossus occidentalis, Leptoglossus phyllopus, Lygocoris spp., for example Lygocoris pabulinus, Lygus spp., for example Lygus elisus, Lygus hesperus, Lygus lineolaris, Macropes excavatus, Megacopta cribraria, Miridae, Monalonion atratum, Nezara spp., for example Nezara viridula, Nysius spp., Oebalus spp., Pentomidae, Piesma quadrata, Piezodorus spp., for example Piezodorus guildinii, Psallus spp., Pseudacysta persea, Rhodnius spp., Sahlbergella singularis, Scaptocoris castanea, Scotinophora spp., Stephanitis nashi, Tibraca spp., Triatoma spp.;
from the order of the Hymenoptera, for example Acromyrmex spp., Athalia spp., for example Athalia rosae, Atta spp., Camponotus spp., Dolichovespula spp., Diprion spp., for example Diprion similis, Hoplocampa spp., for example Hoplocampa cookei, Hoplocampa testudinea, Lasius spp., Linepithema (Iridiomyrmex) humile, Monomorium pharaonis, Paratrechina spp., Paravespula spp., Plagiolepis spp., Sirex spp., for example Sirex noctilio, Solenopsis invicta, Tapinoma spp., Technomyrmex albipes, Urocerus spp., Vespa spp., for example Vespa crabro, Wasmannia auropunctata, Xeris spp.;
from the order of the Isopoda, for example Armadillidium vulgare, Oniscus asellus, Porcellio scaber;
from the order of the Isoptera, for example Coptotermes spp., for example Coptotermes formosanus, Cornitermes cumulans, Cryptotermes spp., Incisitermes spp., Kalotermes spp., Microtermes obesi, Nasutitermes spp., Odontotermes spp., Porotermes spp., Reticulitermes spp., for example Reticulitermes flavipes, Reticulitermes hesperus;
from the order of the Lepidoptera, for example Achroia grisella, Acronicta major, Adoxophyes spp., for example Adoxophyes orana, Aedia leucomelas, Agrotis spp., for example Agrotis segetum, Agrotis ipsilon, Alabama spp., for example Alabama argillacea, Amyelois transitella, Anarsia spp., Anticarsia spp., for example Anticarsia gemmatalis, Argyroploce spp., Autographa spp., Barathra brassicae, Blastodacna atra, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., for example Chilo plejadellus, Chilo suppressalis, Choreutis pariana, Choristoneura spp., Chrysodeixis chalcites, Clysia ambiguella, Cnaphalocerus spp., Cnaphalocrocis medinalis, Cnephasia spp., Conopomorpha spp., Conotrachelus spp., Copitarsia spp., Cydia spp., for example Cydia nigricana, Cydia pomonella, Dalaca noctuides, Diaphania spp., Diparopsis spp., Diatraea saccharalis, Dioryctria spp., for example Dioryctria zimmermani, Earias spp., Ecdytolopha aurantium, Elasmopalpus lignosellus, Eldana saccharina, Ephestia spp., for example Ephestia elutella, Ephestia kuehniella, Epinotia spp., Epiphyas postvittana, Erannis spp., Erschoviella musculana, Etiella spp., Eudocima spp., Eulia spp., Eupoecilia ambiguella, Euproctis spp., for example Euproctis chrysorrhoea, Euxoa spp., Feltia spp., Galleria mellonella, Gracillaria spp., Grapholitha spp., for example Grapholita molesta, Grapholita prunivora, Hedylepta spp., Helicoverpa spp., for example Helicoverpa armigera, Helicoverpa zea, Heliothis spp., for example Heliothis virescens, Hofmannophila pseudospretella, Homoeosoma spp., Homona spp., Hyponomeuta padella, Kakivoria flavofasciata, Lampides spp., Laphygma spp., Laspeyresia molesta, Leucinodes orbonalis, Leucoptera spp., for example Leucoptera coffeella, Lithocolletis spp., for example Lithocolletis blancardella, Lithophane antennata, Lobesia spp., for example Lobesia botrana, Loxagrotis albicosta, Lymantria spp., for example Lymantria dispar, Lyonetia spp., for example Lyonetia clerkella, Malacosoma neustria, Maruca testulalis, Mamestra brassicae, Melanitis leda, Mocis spp., Monopis obviella, Mythimna separata, Nemapogon cloacellus, Nymphula spp., Oiketicus spp., Omphisa spp., Operophtera spp., Oria spp., Orthaga spp., Ostrinia spp., for example Ostrinia nubilalis, Panolis flammea, Parnara spp., Pectinophora spp., for example Pectinophora gossypiella, Perileucoptera spp., Phthorimaea spp., for example Phthorimaea operculella, Phyllocnistis citrella, Phyllonorycter spp., for example Phyllonorycter blancardella, Phyllonorycter crataegella, Pieris spp., for example Pieris rapae, Platynota stultana, Plodia interpunctella, Plusia spp., Plutella xylostella (=Plutella maculipennis), Podesia spp., for example Podesia syringae, Prays spp., Prodenia spp., Protoparce spp., Pseudaletia spp., for example Pseudaletia unipuncta, Pseudoplusia includens, Pyrausta nubilalis, Rachiplusia nu, Schoenobius spp., for example Schoenobius bipunctifer, Scirpophaga spp., for example Scirpophaga innotata, Scotia segetum, Sesamia spp., for example Sesamia inferens, Sparganothis spp., Spodoptera spp., for example Spodoptera eradiana, Spodoptera exigua, Spodoptera frugiperda, Spodoptera praefica, Stathmopoda spp., Stenoma spp., Stomopteryx subsecivella, Synanthedon spp., Tecia solanivora, Thaumetopoea spp., Thermesia gemmatalis, Tinea cloacella, Tinea pellionella, Tineola bisselliella, Tortrix spp., Trichophaga tapetzella, Trichoplusia spp., for example Trichoplusia ni, Tryporyza incertulas, Tuta absoluta, Virachola spp.;
from the order of the Orthoptera or Saltatoria, for example Acheta domesticus, Dichroplus spp., Gryllotalpa spp., for example Gryllotalpa gryllotalpa, Hieroglyphus spp., Locusta spp., for example Locusta migratoria, Melanoplus spp., for example Melanoplus devastator, Paratlanticus ussuriensis, Schistocerca gregaria;
from the order of the Phthiraptera, for example Damalinia spp., Haematopinus spp., Linognathus spp., Pediculus spp., Phylloxera vastatrix, Phthirus pubis, Trichodectes spp.;
from the order of the Psocoptera, for example Lepinotus spp., Liposcelis spp.;
from the order of the Siphonaptera, for example, Ceratophyllus spp., Ctenocephalides spp., for example Ctenocephalides canis, Ctenocephalides felis, Pulex irritans, Tunga penetrans, Xenopsylla cheopis;
from the order of the Thysanoptera, for example Anaphothrips obscurus, Baliothrips biformis, Chaetanaphothrips leeuweni, Drepanothrips reuteri, Enneothrips flavens, Frankliniella spp., for example Frankliniella fusca, Frankliniella occidentalis, Frankliniella schultzei, Frankliniella tritici, Frankliniella vaccinii, Frankliniella williamsi, Haplothrips spp., Heliothrips spp., Hercinothrips femoralis, Kakothrips spp., Rhipiphorothrips cruentatus, Scirtothrips spp., Taeniothrips cardamomi, Thrips spp., for example Thrips palmi, Thrips tabaci;
from the order of the Zygentoma (= Thysanura), for example Ctenolepisma spp., Lepisma saccharina, Lepismodes inquilinus, Thermobia domestica;
from the class of the Symphyla, for example Scutigerella spp., for example Scutigerella immaculata;
pests from the phylum of the Mollusca, for example from the class of the Bivalvia, for example Dreissena spp.,
and also from the class of the Gastropoda, for example Arion spp., for example Arion ater rufus, Biomphalaria spp., Bulinus spp., Deroceras spp., for example Deroceras laeve, Galba spp., Lymnaea spp., Oncomelania spp., Pomacea spp., Succinea spp.;
plant pests from the phylum of the Nematoda, i.e. phytoparasitic nematodes, in particular Aglenchus spp., for example Aglenchus agricola, Anguina spp., for example Anguina tritici, Aphelenchoides spp., for example Aphelenchoides arachidis, Aphelenchoides fragariae, Belonolaimus spp., for example Belonolaimus gracilis, Belonolaimus longicaudatus, Belonolaimus nortoni, Bursaphelenchus spp., for example Bursaphelenchus cocophilus, Bursaphelenchus eremus, Bursaphelenchus xylophilus, Cacopaurus spp., for example Cacopaurus pestis, Criconemella spp., for example Criconemella curvata, Criconemella onoensis, Criconemella ornata, Criconemella rusium, Criconemella xenoplax (= Mesocriconema xenoplax), Criconemoides spp., for example Criconemoides ferniae, Criconemoides onoense, Criconemoides ornatum, Ditylenchus spp., for example Ditylenchus dipsaci, Dolichodorus spp., Globodera spp., for example Globodera pallida, Globodera rostochiensis, Helicotylenchus spp., for example Helicotylenchus dihystera, Hemicriconemoides spp., Hemicycliophora spp., Heterodera spp., for example Heterodera avenae, Heterodera glycines, Heterodera schachtii, Hirschmaniella spp., Hoplolaimus spp., Longidorus spp., for example Longidorus africanus, Meloidogyne spp., for example Meloidogyne chitwoodi, Meloidogyne fallax, Meloidogyne hapla, Meloidogyne incognita, Meloinema spp., Nacobbus spp., Neotylenchus spp., ., Paralongidorus spp., Paraphelenchus spp., Paratrichodorus spp., for example Paratrichodorus minor, Paratylenchus spp., Pratylenchus spp., for example Pratylenchus penetrans, Pseudohalenchus spp., Psilenchus spp., Punctodera spp., Quinisulcius spp., Radopholus spp., for example Radopholus citrophilus, Radopholus similis, Rotylenchulus spp., Rotylenchus spp., Scutellonema spp., Subanguina spp., Trichodorus spp., for example Trichodorus obtusus, Trichodorus primitivus, Tylenchorhynchus spp., for example Tylenchorhynchus annulatus, Tylenchulus spp., for example Tylenchulus semipenetrans, Xiphinema spp., for example Xiphinema index.

### Nematodes

In the present context, the term "nematodes" comprises all species of the phylum Nematoda and here in particular species acting as parasites on plants or fungi (for example species of the order Aphelenchida, Meloidogyne, Tylenchida and others) or else on humans and animals (for example species of the orders Trichinellida, Tylenchida, Rhabditina and Spirurida) and causing damage in or on these living organisms, and also other parasitic helminths.

A nematicide in crop protection, as described herein, is capable of controlling nematodes.

The term "controlling nematodes" means killing the nematodes or preventing or impeding their development or their growth or preventing or impeding their penetration into or their sucking on plant tissue.

Here, the efficacy of the compounds is determined by comparing mortalities, gall formation, cyst formation, nematode density per volume of soil, nematode density per root, number of nematode eggs per soil volume, mobility of the nematodes between a plant or plant part treated with the capsule suspension concentrates according to the invention or the treated soil and an untreated plant or plant part or the untreated soil (100%). Preferably, the reduction achieved is 25-50% in comparison to an untreated plant, plant part or the untreated soil, particularly preferably 51 - 79% and very particularly preferably the complete kill or the complete prevention of development and growth of the nematodes by a reduction of 80 to 100%. The control of nematodes as described herein also comprises the control of proliferation of the nematodes (development of cysts and/or eggs). Capsule suspension concentrates according to the invention can also be used to keep the plants or animals healthy, and they can be employed curatively, preventatively or systemically for the control of nematodes.

The person skilled in the art knows methods for determining mortalities, gall formation, cyst formation, nematode density per volume of soil, nematode density per root, number of nematode eggs per volume of soil, mobility of the nematodes.

The use of a capsule suspension concentrates according to the invention may keep the plant healthy and also comprises a reduction of the damage caused by nematodes and an increase of the harvest yield.

In the present context, the term "nematodes" refers to plant nematodes which comprise all nematodes which damage plants. Plant nematodes comprise phytoparasitic nematodes and soil-borne nematodes. The phytoparasitic nematodes include ectoparasites such as Xiphinema spp., Longidorus spp. and Trichodorus spp.; semiparasites such as Tylenchulus spp.; migratory endoparasites such as Pratylenchus spp., Radopholus spp. and Scutellonema spp.; non-migratory parasites such as Heterodera spp., Globodera spp. and Meloidogyne spp., and also stem and leaf endoparasites such as Ditylenchus spp., Aphelenchoides spp. and Hirschmaniella spp. Particularly damaging root-parasitic soil nematodes are, for example, cyst-forming nematodes of the genera Heterodera or Globodera, and/or root gall nematodes of the genus Meloidogyne. Damaging species of these genera are, for example, Meloidogyne incognita, Heterodera glycines (soya bean cyst nematode), Globodera pallida and Globodera rostochiensis (yellow potato cyst nematode), these species being controlled effectively by the compounds described in the present text. However, the use of the compounds described in the present text is by no means restricted to these genera or species, but also extends in the same manner to other nematodes.

The plant nematodes include, for example, Aglenchus agricola, Anguina tritici, Aphelenchoides arachidis, Aphelenchoides fragaria, and the stem and leaf endoparasites Aphelenchoides spp., Belonolaimus gracilis, Belonolaimus longicaudatus, Belonolaimus nortoni, Bursaphelenchus cocophilus, Bursaphelenchus eremus, Bursaphelenchus xylophilus und Bursaphelenchus spp., Cacopaurus pestis, Criconemella curvata, Criconemella onoensis, Criconemella ornata, Criconemella rusium, Criconemella xenoplax (= Mesocriconema xenoplax) and Criconemella spp.,

Criconemoides ferniae, Criconemoides onoense, Criconemoides ornatum and Criconemoides spp., Ditylenchus destructor, Ditylenchus dipsaci, Ditylenchus myceliophagus and also the stem and leaf endoparasites Ditylenchus spp., Dolichodorus heterocephalus, Globodera pallida (=Heterodera pallida), Globodera rostochiensis (yellow potato cyst nematode), Globodera solanacearum, Globodera tabacum, Globodera virginia and the non-migratory cyst-forming parasites Globodera spp., Helicotylenchus digonicus, Helicotylenchus dihystera, Helicotylenchus erythrine, Helicotylenchus multicinctus, Helicotylenchus nannus, Helicotylenchus pseudorobustus and Helicotylenchus spp., Hemicriconemoides, Hemicycliophora arenaria, Hemicycliophora nudata, Hemicycliophora parvana, Heterodera avenae, Heterodera cruciferae, Heterodera glycines (soya bean cyst nematode), Heterodera oryzae, Heterodera schachtii, Heterodera zeae and the non-migratory cyst-forming parasites Heterodera spp., Hirschmaniella gracilis, Hirschmaniella oryzae, Hirschmaniella spinicaudata and the stem and leaf endoparasites Hirschmaniella spp., Hoplolaimus aegyptii, Hoplolaimus californicus, Hoplolaimus columbus, Hoplolaimus galeatus, Hoplolaimus indicus, Hoplolaimus magnistylus, Hoplolaimus pararobustus, Longidorus africanus, Longidorus breviannulatus, Longidorus elongatus, Longidorus laevicapitatus, Longidorus vineacola and the ectoparasites Longidorus spp., Meloidogyne acronea, Meloidogyne africana, Meloidogyne arenaria, Meloidogyne arenaria thamesi, Meloidogyne artiella, Meloidogyne chitwoodi, Meloidogyne coffeicola, Meloidogyne ethiopica, Meloidogyne exigua, Meloidogyne fallax, Meloidogyne graminicola, Meloidogyne graminis, Meloidogyne hapla, Meloidogyne incognita, Meloidogyne incognita acrita, Meloidogyne javanica, Meloidogyne kikuyensis, Meloidogyne minor, Meloidogyne naasi, Meloidogyne paranaensis, Meloidogyne thamesi and the non-migratory parasites Meloidogyne spp., Meloinema spp., Nacobbus aberrans, Neotylenchus vigissi, Paraphelenchus pseudoparietinus, Paratrichodorus allius, Paratrichodorus lobatus, Paratrichodorus minor, Paratrichodorus nanus, Paratrichodorus porosus, Paratrichodorus teres and Paratrichodorus spp., Paratylenchus hamatus, Paratylenchus minutus, Paratylenchus projectus and Paratylenchus spp., Pratylenchus agilis, Pratylenchus alleni, Pratylenchus andinus, Pratylenchus brachyurus, Pratylenchus cerealis, Pratylenchus coffeae, Pratylenchus crenatus, Pratylenchus delattrei, Pratylenchus giibbicaudatus, Pratylenchus goodeyi, Pratylenchus hamatus, Pratylenchus hexincisus, Pratylenchus loosi, Pratylenchus neglectus, Pratylenchus penetrans, Pratylenchus pratensis, Pratylenchus scribneri, Pratylenchus teres, Pratylenchus thornei, Pratylenchus vulnus, Pratylenchus zeae and the migratory endoparasites Pratylenchus spp., Pseudohalenchus minutus, Psilenchus magnidens, Psilenchus tumidus, Punctodera chalcoensis, Quinisulcius acutus, Radopholus citrophilus, Radopholus similis, the migratory endoparasites Radopholus spp., Rotylenchulus borealis, Rotylenchulus parvus, Rotylenchulus reniformis and Rotylenchulus spp., Rotylenchus laurentinus, Rotylenchus macrodoratus, Rotylenchus robustus, Rotylenchus uniformis and Rotylenchus spp., Scutellonema brachyurum, Scutellonema bradys, Scutellonema clathricaudatum and the migratory endoparasites Scutellonema spp., Subanguina radiciola, Tetylenchus nicotianae, Trichodorus cylindricus, Trichodorus minor, Trichodorus primitivus, Trichodorus proximus, Trichodorus similis, Trichodorus sparsus and the ectoparasites Trichodorus spp., Tylenchorhynchus agri, Tylenchorhynchus brassicae, Tylenchorhynchus clarus, Tylenchorhynchus claytoni, Tylenchorhynchus digitatus, Tylenchorhynchus ebriensis, Tylenchorhynchus maximus, Tylenchorhynchus nudus, Tylenchorhynchus vulgaris and Tylenchorhynchus spp., Tylenchulus semipenetrans and the semiparasites Tylenchulus spp., Xiphinema americanum, Xiphinema brevicolle, Xiphinema dimorphicaudatum, Xiphinema index and the ectoparasites Xiphinema spp.

Nematodes for the control of which a capsule suspension concentrates according to the invention may be used include nematodes of the genus Meloidogyne such as the Southern root-knot nematode (Meloidogyne incognita), the Javanese root-knot nematode (Meloidogyne javanica), the Northern root-knot nematode (Meloidogyne hapla) and the peanut root-knot nematode (Meloidogyne arenaria); nematodes of the genus Ditylenchus such as the potato rot nematode (Ditylenchus destructor) and stem and bulb eelworm (Ditylenchus dipsaci); nematodes of the genus Pratylenchus such as the cob root-lesion nematode (Pratylenchus penetrans), the chrysanthemum root-lesion nematode (Pratylenchus fallax), the coffee root nematode (Pratylenchus coffeae), the tea root nematode (Pratylenchus loosi) and the walnut root-lesion nematode (Pratylenchus vulnus); nematodes of the genus Globodera such as the yellow potato cyst nematode (Globoderarostochiensis) and the white potato cyst nematode (Globodera pallida); nematodes of the genus Heterodera such as the soya bean cyst nematode (Heterodera glycines) and beet cyst eelworm (Heterodera schachtii); nematodes of the genus Aphelenchoides such as the rice white-tip nematode (Aphelenchoides besseyi), the chrysanthemum nematode (Aphelenchoides ritzemabosi) and the strawberry nematode (Aphelenchoides fragariae); nematodes of the genus Aphelenchus such as the fungivorous nematode (Aphelenchus avenae); nematodes of the genus Radopholus, such as the burrowing nematode (Radopholus similis); nematodes of the genus Tylenchulus such as the citrus root nematode (Tylenchulus semipenetrans); nematodes of the genus Rotylenchulus such as the reniform nematode (Rotylenchulus reniformis); tree-dwelling nematodes such as the pine wood nematode (Bursaphelenchus xylophilus) and the red ring nematode (Bursaphelenchus cocophilus) and the like.

Plants for the protection of which a capsule suspension concentrates according to the invention can be used include plants such as cereals (for example rice, barley, wheat, rye, oats, maize and the like), beans (soya bean, aduki bean, bean, broadbean, peas, peanuts and the like), fruit trees/fruits (apples, citrus species, pears, grapevines, peaches, Japanese apricots, cherries, walnuts, almonds, bananas, strawberries and the like), vegetable species (cabbage, tomato, spinach, broccoli, lettuce, onions, spring onion, pepper and the like), root crops (carrot, potato, sweet potato, radish, lotus root, turnip and the like), plant for industrial raw materials (cotton, hemp, paper mulberry, mitsumata, rape, beet, hops, sugar cane, sugar beet, olive, rubber, palm trees, coffee, tobacco, tea and the like), cucurbits (pumpkin, cucumber, water melon, melon and the like), meadow plants (cocksfoot, sorghum, timothy-grass, clover, alfalfa and the like), lawn grasses (mascarene grass, bentgrass and the like), spice plants etc. (lavender, rosemary, thyme, parsley, pepper, ginger and the like) and flowers (chrysanthemums, rose, orchid and the like).

The capsule suspension concentrates according to the invention are particularly suitable for controlling coffee nematodes, in particular Pratylenchus brachyurus, Pratylenchus coffeae, Meloidogyne exigua, Meloidogyne incognita, Meloidogyne coffeicola, Helicotylenchus spp. and also Meloidogyne paranaensis, Rotylenchus spp., Xiphinema spp., Tylenchorhynchus spp. and Scutellonema spp..

The capsule suspension concentrates according to the invention are particularly suitable for controlling potato nematodes, in particular Pratylenchus brachyurus, Pratylenchus pratensis, Pratylenchus scribneri, Pratylenchus penetrans, Pratylenchus coffeae, Ditylenchus dipsaci and of Pratylenchus alleni, Pratylenchus andinus, Pratylenchus cerealis, Pratylenchus crenatus, Pratylenchus hexincisus, Pratylenchus loosi, Pratylenchus neglectus, Pratylenchus teres, Pratylenchus thornei, Pratylenchus vulnus, Belonolaimus longicaudatus, Trichodorus cylindricus, Trichodorus primitivus, Trichodorus proximus, Trichodorus similis, Trichodorus sparsus, Paratrichodorus minor, Paratrichodorus allius, Paratrichodorus nanus, Paratrichodorus teres, Meloidogyne arenaria, Meloidogyne fallax, Meloidogyne hapla, Meloidogyne thamesi, Meloidogyne incognita, Meloidogyne chitwoodi, Meloidogyne javanica, Nacobbus aberrans, Globodera rostochiensis, Globodera pallida, Ditylenchus destructor, Radopholus similis, Rotylenchulus reniformis, Neotylenchus vigissi, Paraphelenchus pseudoparietinus, Aphelenchoides fragariae and Meloinema spp.

The capsule suspension concentrates according to the invention are particularly suitable for controlling tomato nematodes, in particular Meloidogyne arenaria, Meloidogyne hapla, Meloidogyne javanica, Meloidogyne incognita, Pratylenchus penetrans and also Pratylenchus brachyurus, Pratylenchus coffeae, Pratylenchus scribneri, Pratylenchus vulnus, Paratrichodorus minor, Meloidogyne exigua, Nacobbus aberrans, Globodera solanacearum, Dolichodorus heterocephalus and Rotylenchulus reniformis.

The capsule suspension concentrates according to the invention are particularly suitable for controlling cucumber plant nematodes, in particular Meloidogyne arenaria, Meloidogyne hapla, Meloidogyne javanica, Meloidogyne incognita, Rotylenchulus reniformis and Pratylenchus thornei.

The capsule suspension concentrates according to the invention are particularly suitable for controlling cotton nematodes, in particular Belonolaimus longicaudatus, Meloidogyne incognita, Hoplolaimus columbus, Hoplolaimus galeatus and Rotylenchulus reniformis.

The capsule suspension concentrates according to the invention are particularly suitable for controlling maize nematodes, in particular Belonolaimus longicaudatus, Paratrichodorus minor and also Pratylenchus brachyurus, Pratylenchus delattrei, Pratylenchus hexincisus, Pratylenchus penetrans, Pratylenchus zeae, (Belonolaimus gracilis), Belonolaimus nortoni, Longidorus breviannulatus, Meloidogyne arenaria, Meloidogyne arenaria thamesi, Meloidogyne graminis, Meloidogyne incognita, Meloidogyne incognita acrita, Meloidogyne javanica, Meloidogyne naasi, Heterodera avenae, Heterodera oryzae, Heterodera zeae, Punctodera chalcoensis, Ditylenchus dipsaci, Hoplolaimus aegyptii, Hoplolaimus magnistylus, Hoplolaimus galeatus, Hoplolaimus indicus, Helicotylenchus digonicus, Helicotylenchus dihystera, Helicotylenchus pseudorobustus, Xiphinema americanum, Dolichodorus heterocephalus, Criconemella ornata, Criconemella onoensis, Radopholus similis, Rotylenchulus borealis, Rotylenchulus parvus, Tylenchorhynchus agri, Tylenchorhynchus clarus, Tylenchorhynchus claytoni, Tylenchorhynchus maximus, Tylenchorhynchus nudus, Tylenchorhynchus vulgaris, Quinisulcius acutus, Paratylenchus minutus, Hemicycliophora parvana, Aglenchus agricola, Anguina tritici, Aphelenchoides arachidis, Scutellonema brachyurum and Subanguina radiciola.

The capsule suspension concentrates according to the invention are particularly suitable for controlling soya bean nematodes, in particular Pratylenchus brachyurus, Pratylenchus pratensis, Pratylenchus penetrans, Pratylenchus scribneri, Belonolaimus longicaudatus, Heterodera glycines, Hoplolaimus columbus and also Pratylenchus coffeae, Pratylenchus hexincisus, Pratylenchus neglectus, Pratylenchus crenatus, Pratylenchus alleni, Pratylenchus agilis, Pratylenchus zeae, Pratylenchus vulnus, (Belonolaimus gracilis), Meloidogyne arenaria, Meloidogyne incognita, Meloidogyne javanica, Meloidogyne hapla, Hoplolaimus columbus, Hoplolaimus galeatus and Rotylenchulus reniformis.

The capsule suspension concentrates according to the invention are particularly suitable for controlling tobacco nematodes, in particular Meloidogyne incognita, Meloidogyne javanica and also Pratylenchus brachyurus, Pratylenchus pratensis, Pratylenchus hexincisus, Pratylenchus penetrans, Pratylenchus neglectus, Pratylenchus crenatus, Pratylenchus thornei, Pratylenchus vulnus, Pratylenchus zeae, Longidorus elongatu, Paratrichodorus lobatus, Trichodorus spp., Meloidogyne arenaria, Meloidogyne hapla, Globodera tabacum, Globodera solanacearum, Globodera virginiae, Ditylenchus dipsaci, Rotylenchus spp., Helicotylenchus spp., Xiphinema americanum, Criconemella spp., Rotylenchulus reniformis, Tylenchorhynchus claytoni, Paratylenchus spp. and Tetylenchus nicotianae.

The capsule suspension concentrates according to the invention are particularly suitable for controlling citrus nematodes, in particular Pratylenchus coffeae and also Pratylenchus brachyurus, Pratylenchus vulnus, Belonolaimus longicaudatus, Paratrichodorus minor, Paratrichodorus porosus, Trichodorus , Meloidogyne incognita, Meloidogyne incognita acrita, Meloidogyne javanica, Rotylenchus macrodoratus, Xiphinema americanum, Xiphinema brevicolle, Xiphinema index, Criconemella spp., Hemicriconemoides, Radopholus similis and Radopholus citrophilus, Hemicycliophora arenaria, Hemicycliophora nudata and Tylenchulus semipenetrans.

The capsule suspension concentrates according to the invention are particularly suitable for controlling banana nematodes, in particular Pratylenchus coffeae, Radopholus similis and also Pratylenchus giibbicaudatus, Pratylenchus loosi, Meloidogyne spp., Helicotylenchus multicinctus, Helicotylenchus dihystera and Rotylenchulus spp..

The capsule suspension concentrates according to the invention are particularly suitable for controlling pineapple nematodes, in particular Pratylenchus zeae, Pratylenchus pratensis, Pratylenchus brachyurus, Pratylenchus goodeyi., Meloidogyne spp., Rotylenchulus reniformis and also Longidorus elongatus, Longidorus laevicapitatus, Trichodorus primitivus, Trichodorus minor, Heterodera spp., Ditylenchus myceliophagus, Hoplolaimus californicus, Hoplolaimus pararobustus, Hoplolaimus indicus, Helicotylenchus dihystera, Helicotylenchus nannus, Helicotylenchus multicinctus, Helicotylenchus erythrine, Xiphinema dimorphicaudatum, Radopholus similis, Tylenchorhynchus digitatus, Tylenchorhynchus ebriensis, Paratylenchus minutus, Scutellonema clathricaudatum, Scutellonema bradys, Psilenchus tumidus, Psilenchus magnidens, Pseudohalenchus minutus, Criconemoides ferniae, Criconemoides onoense and Criconemoides ornatum.

The capsule suspension concentrates according to the invention are particularly suitable for controlling grapevine nematodes, in particular Pratylenchus vulnus, Meloidogyne arenaria, Meloidogyne incognita, Meloidogyne javanica, Xiphinema americanum, Xiphinema index and also Pratylenchus pratensis, Pratylenchus scribneri, Pratylenchus neglectus, Pratylenchus brachyurus, Pratylenchus thornei and Tylenchulus semipenetrans.

The capsule suspension concentrates according to the invention are particularly suitable for controlling nematodes in tree crops - pome fruit, in particular Pratylenchus penetrans and also Pratylenchus vulnus, Longidorus elongatus, Meloidogyne incognita and Meloidogyne hapla.

The capsule suspension concentrates according to the invention are particularly suitable for controlling nematodes in tree crops - stone fruit, in particular Pratylenchus penetrans, Pratylenchus vulnus, Meloidogyne arenaria, Meloidogyne hapla, Meloidogyne javanica, Meloidogyne incognita, Criconemella xenoplax and of Pratylenchus brachyurus, Pratylenchus coffeae, Pratylenchus scribneri, Pratylenchus zeae, Belonolaimus longicaudatus, Helicotylenchus dihystera, Xiphinema americanum, Criconemella curvata, Tylenchorhynchus claytoni, Paratylenchus hamatus, Paratylenchus projectus, Scutellonema brachyurum and Hoplolaimus galeatus.

The capsule suspension concentrates according to the invention are particularly suitable for controlling nematodes in tree crops, sugar cane and rice, in particular Trichodorus spp., Criconemella spp. and also Pratylenchus spp., Paratrichodorus spp., Meloidogyne spp., Helicotylenchus spp., Tylenchorhynchus spp., Aphelenchoides spp., Heterodera spp, Xiphinema spp. and Cacopaurus pestis.

The capsule suspension concentrates according to the invention can optionally, at certain concentrations or application rates, also be used as herbicides, safeners, growth regulators or agents to improve plant properties, as microbicides or gametocides, for example as fungicides, antimycotics, bactericides, viricides (including agents against viroids) or as agents against MLO (mycoplasma-like organisms) and RLO (rickettsia-like organisms). If appropriate, they can also be used as intermediates or precursors for the synthesis of other active compounds.

The treatment of the plants and plant parts with the capsule suspension concentrates according to the invention is carried out directly or by action on their surroundings, habitat or storage space using customary treatment methods, for example by dipping, spraying, atomizing, irrigating, evaporating, dusting, fogging, broadcasting, foaming, painting, spreading-on, injecting, watering (drenching), drip irrigating and, in the case of propagation material, in particular in the case of seed, furthermore as a powder for dry seed treatment, a solution for liquid seed treatment, a water-soluble powder for slurry treatment, by incrusting, by coating with one or more coats, etc. It is furthermore possible to apply the capsule suspension concentrates according to the invention by the ultra-low volume method or to inject the application form or the capsule suspension concentrates according to the invention itself into the soil.

A preferred direct treatment of the plants is foliar application, i.e. the capsule suspension concentrates according to the invention are applied to the foliage, where treatment frequency and the application rate should be adjusted according to the level of infestation with the pest in question.

In the case of systemically active compounds, the capsule suspension concentrates according to the invention also access the plants via the root system. The plants are then treated by the action of the capsule suspension concentrates according to the invention on the habitat of the plant. This may be done, for example, by drenching, or by mixing into the soil or the nutrient solution, i.e. the locus of the plant (e.g. soil or hydroponic systems) is impregnated with a liquid form of the capsule suspension concentrates according to the invention , or by soil application, i.e. the capsule suspension concentrates according to the invention according to the invention are introduced in solid form (e.g. in the form of granules) into the locus of the plants, or by drip application (often also referred to as "chemigation"), i.e. the liquid application of the capsule suspension concentrates according to the invention according to the invention from surface or sub-surface driplines over a certain period of time together with varying amounts of water at defined locations in the vicinity of the plants. In the case of paddy rice crops, this can also be done by metering the capsule suspension concentrates according to the invention in a solid application form (for example as granules) into a flooded paddy field.

### Fungicides:

The capsule suspension concentrates according to the invention may be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

Plant cultivars are understood to mean plants which have new properties ("traits") and have been obtained by conventional breeding, by mutagenesis or by recombinant DNA techniques. They can be cultivars, varieties, bio- or genotypes.

Plant parts are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

Plants and plant cultivars which may be treated by the above disclosed methods include plants and plant cultivars which are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigor which results in generally higher yield, vigor, health and resistance towards biotic and abiotic stresses.

### Pathogens

Non-limiting examples of pathogens of fungal diseases which may be treated in accordance with the invention include:
diseases caused by powdery mildew pathogens, for example *Blumeria* species, for example *Blumeria graminis; Podosphaera* species, for example *Podosphaera leucotricha; Sphaerotheca* species, for example *Sphaerotheca fuliginea; Uncinula* species, for example *Uncinula necator;*
diseases caused by rust disease pathogens, for example *Gymnosporangium* species, for example *Gymnosporangium sabinae; Hemileia* species, for example *Hemileia vastatrix; Phakopsora* species, for example *Phakopsora pachyrhizi* or *Phakopsora meibomiae; Puccinia* species, for example *Puccinia recondita, Puccinia graminis* oder *Puccinia striiformis; Uromyces* species, for example *Uromyces appendiculatus;*
diseases caused by pathogens from the group of the Oomycetes, for example *Albugo* species, for example *Albugo candida; Bremia* species, for example *Bremia lactucae; Peronospora* species, for example *Peronospora pisi or P. brassicae; Phytophthora* species, for example *Phytophthora infestans; Plasmopara* species, for example *Plasmopara viticola; Pseudoperonospora* species, for example *Pseudoperonospora humuli* or *Pseudoperonospora cubensis; Pythium* species, for example *Pythium ultimum;*
leaf blotch diseases and leaf wilt diseases caused, for example, by *Alternaria* species, for example *Alternaria solani; Cercospora* species, for example *Cercospora beticola; Cladiosporium* species, for example *Cladiosporium cucumerinum; Cochliobolus* species, for example Cochliobolus sativus (conidial form: *Drechslera,* syn: *Helminthosporium*) or *Cochliobolus miyabeanus; Colletotrichum* species, for example *Colletotrichum lindemuthanium; Corynespora* species, for example *Corynespora cassiicola; Cycloconium* species, for example *Cycloconium oleaginum; Diaporthe* species, for example *Diaporthe citri; Elsinoe* species, for example *Elsinoe fawcettii; Gloeosporium* species, for example *Gloeosporium laeticolor; Glomerella* species, for example *Glomerella cingulata; Guignardia* species, for example *Guignardia bidwelli; Leptosphaeria* species, for example *Leptosphaeria maculans; Magnaporthe* species, for example *Magnaporthe grisea; Microdochium* species, for example *Microdochium nivale; Mycosphaerella* species, for example *Mycosphaerella graminicola, Mycosphaerella arachidicola* or *Mycosphaerella fijiensis; Phaeosphaeria* species, for example *Phaeosphaeria nodorum; Pyrenophora* species, for example *Pyrenophora teres* or *Pyrenophora tritici repentis; Ramularia* species, for example *Ramularia collo-cygni* or *Ramularia areola; Rhynchosporium* species, for example *Rhynchosporium secalis; Septoria* species, for example *Septoria apii* or *Septoria lycopersici; Stagonospora* species, for example *Stagonospora nodorum; Typhula* species, for example *Typhula incarnata; Venturia* species, for example *Venturia inaequalis;*
root and stem diseases caused, for example, by *Corticium* species, for example *Corticium graminearum; Fusarium* species, for example *Fusarium oxysporum; Gaeumannomyces* species, for example *Gaeumannomyces graminis; Plasmodiophora* species, for example *Plasmodiophora brassicae; Rhizoctonia* species, for example *Rhizoctonia solani; Sarocladium* species, for example *Sarocladium oryzae; Sclerotium* species, for example *Sclerotium oryzae; Tapesia* species, for example *Tapesia acuformis; Thielaviopsis* species, for example *Thielaviopsis basicola;*
ear and panicle diseases (including corn cobs) caused, for example, by *Alternaria* species, for example *Alternaria spp.; Aspergillus* species, for example *Aspergillus flavus; Cladosporium* species, for example *Cladosporium cladosporioides; Claviceps* species, for example *Claviceps purpurea; Fusarium* species, for example *Fusarium culmorum; Gibberella* species, for example *Gibberella zeae; Monographella* species, for example *Monographella nivalis; Stagnospora* species, for example *Stagnospora nodorum;*
diseases caused by smut fungi, for example *Sphacelotheca* species, for example *Sphacelotheca reiliana; Tilletia* species, for example *Tilletia caries* or *Tilletia controversa; Urocystis* species, for example *Urocystis occulta; Ustilago* species, for example *Ustilago nuda;*
fruit rot caused, for example, by *Aspergillus* species, for example *Aspergillus flavus; Botrytis* species, for example *Botrytis cinerea; Monilinia* species, for example *Monilinia laxa; Penicillium* species, for example *Penicillium expansum* or *Penicillium purpurogenum; Rhizopus* species, for example *Rhizopus stolonifer; Sclerotinia* species, for example *Sclerotinia sclerotiorum; Verticilium* species, for example *Verticilium alboatrum;*
seed- and soil-borne rot and wilt diseases, and also diseases of seedlings, caused, for example, by *Alternaria* species, for example *Alternaria brassicicola; Aphanomyces* species, for example *Aphanomyces euteiches; Ascochyta* species, for example *Ascochyta lentis; Aspergillus* species, for example *Aspergillus flavus; Cladosporium* species, for example *Cladosporium herbarum; Cochliobolus* species, for example *Cochliobolus sativus* (conidial form: *Drechslera,* Bipolaris Syn: *Helminthosporium); Colletotrichum* species, for example *Colletotrichum coccodes; Fusarium* species, for example *Fusarium culmorum; Gibberella* species, for example *Gibberella zeae; Macrophomina* species, for example *Macrophomina phaseolina; Microdochium* species, for example *Microdochium nivale; Monographella* species, for example *Monographella nivalis; Penicillium* species, for example *Penicillium expansum; Phoma* species, for example *Phoma lingam; Phomopsis* species, for example *Phomopsis sojae; Phytophthora* species, for example *Phytophthora cactorum; Pyrenophora* species, for example *Pyrenophora graminea; Pyricularia* species, for example *Pyricularia oryzae; Pythium* species, for example *Pythium ultimum; Rhizoctonia* species, for example *Rhizoctonia solani; Rhizopus* species, for example *Rhizopus oryzae; Sclerotium* species, for example *Sclerotium rolfsii; Septoria* species, for example *Septoria nodorum; Typhula* species, for example *Typhula incarnata; Verticillium* species, for example *Verticillium dahliae;*
cancers, galls and witches' broom caused, for example, by *Nectria* species, for example *Nectria galligena;*
wilt diseases caused, for example, by *Verticillium* species, for example *Verticillium longisporum; Fusarium* species, for example *Fusarium oxysporum;*
deformations of leaves, flowers and fruits caused, for example, by *Exobasidium* species, for example *Exobasidium vexans; Taphrina* species, for example *Taphrina deformans;*
degenerative diseases in woody plants, caused, for example, by *Esca* species, for example *Phaeomoniella chlamydospora, Phaeoacremonium aleophilum* or *Fomitiporia mediterranea; Ganoderma* species, for example *Ganoderma boninense;*
diseases of plant tubers caused, for example, by *Rhizoctonia* species, for example *Rhizoctonia solani; Helminthosporium* species, for example *Helminthosporium solani;*
diseases caused by bacterial pathogens, for example *Xanthomonas* species, for example *Xanthomonas campestris pv. oryzae; Pseudomonas* species, for example *Pseudomonas syringae pv. lachrymans; Erwinia* species, for example *Erwinia amylovora; Liberibacter* species, for example *Liberibacter asiaticus; Xyella* species, for example *Xylella fastidiosa; Ralstonia* species, for example *Ralstonia solanacearum; Dickeya* species, for example *Dickeya solani; Clavibacter* species, for example *Clavibacter michiganensis; Streptomyces* species, for example *Streptomyces scabies.*

### diseases of soya beans:

Fungal diseases on leaves, stems, pods and seeds caused, for example, by *Alternaria* leaf spot (*Alternaria spec. atrans tenuissima*), *Anthracnose* (*Colletotrichum gloeosporoides dematium var. truncatum*), brown spot (*Septoria glycines*), *cercospora* leaf spot and blight (*Cercospora kikuchii*), *choanephora* leaf blight (*Choanephora infundibulifera trispora (Syn.)*), *dactuliophora* leaf spot (*Dactuliophora glycines*), downy mildew (*Peronospora manshurica*), *drechslera* blight (*Drechslera glycini*), frogeye leaf spot (*Cercospora sojina*), *leptosphaerulina* leaf spot (*Leptosphaerulina trifolii), phyllostica* leaf spot (*Phyllosticta sojaecola*), pod and stem blight (*Phomopsis sojae*), powdery mildew (*Microsphaera diffusa*), *pyrenochaeta* leaf spot (*Pyrenochaeta glycines*), rhizoctonia aerial, foliage, and web blight (*Rhizoctonia solani*), rust (*Phakopsora pachyrhizi, Phakopsora meibomiae*), scab (*Sphaceloma glycines*), *stemphylium* leaf blight (*Stemphylium botryosum*), sudden death syndrome (*Fusarium virguliforme*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot (*Fusarium oxysporum, Fusarium orthoceras, Fusarium semitectum, Fusarium equiseti*), mycoleptodiscus root rot (*Mycoleptodiscus terrestris*), neocosmospora (*Neocosmospora vasinfecta*), pod and stem blight (*Diaporthe phaseolorum*), stem canker (*Diaporthe phaseolorum var. caulivora*), phytophthora rot (*Phytophthora megasperma*), brown stem rot (*Phialophora gregata*), pythium rot (*Pythium aphanidermatum, Pythium irregulare, Pythium debaryanum, Pythium myriotylum, Pythium ultimum),* rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

The invention is illustrated by the examples below.

### Examples

### Substances and abbreviations used:

The terms used in the examples below have the following meanings:
- mefenpyr-diethyl: diethyl (*RS*)-1-(2,4-dichlorophenyl)-5-methyl-2-pyrazoline-3,5-dicarboxylate, (Bayer AG), melting range 50-55°C
- DCPMI: 2-[(2,4-dichlorophenyl)methyl]-4,4'-dimethyl-3-isoxazolidinone (CAS Number 81777-95-9 or IPUAC 2-(2,4-dichlorobenzyl)-4,4-dimethyl-1,2-oxazolidin-3-one, abbreviated hereinafter to DCPMI)
- Deltramethrin: (1*R*,3*R*)-[(*S*)-α-Cyano-3-phenoxybenzyl-3-(2,2-dibromvinyl)]-2,2-dimethylcyclopropancarboxylat, CAS Number 52918-63-5, Bayer AG
- citric acid: polybasic organic acid
- Rhodopol® G: xanthan derivative (Solvay)
- SAG 1572: silicone defoamer (Momentive)
- Proxel® GXL: preservative (biocide, Proxel)
- Solvesso® 200 ND: mineral oil, ExxonMobil, naphthalene-free
- Desmodur® 44V20L: polymeric MDI, Covestro AG, functionality 2.7.
- HDA: hexamethylene-1,6-diam, BASF
- Kuraray Poval® 26-88: polyvinyl alcohol from Kuraray, about 88% hydrolysed polyvinyl acetate
- Reax 88B: Lignosulfonate, MeadWestVaco
- Compound N1: Ethane-1,2-diyl bis(6-aminohexanoate) sulphate salt (prepared as described below), corresponds to 4.27 mmol NH2 / g sample (thus 1 g hexamethylendiamine will be replaced with 4 g of compound X This corresponds to compound IV of the invention.
- ε-Caprolactam: (ex Acros Organics)
- Pyrrolidone: (ex Acros Organics)
- Monoethylene glycol: (ex Sigma-Aldrich)
- Polytetrahydrofurane: (ex Sigma-Aldrich)
- Triethyleneglycol: (ex Sigma-Aldrich)
- Glycerol: (ex Sigma-Aldrich)
- H2SO4 (95%): (ex VWR)

### Examples

### Preparation of Compound N1 (According to formula IV):-Ethane-1,2-diyl bis(6-aminohexanoate) sulphate salt

### Preparation of ethane-1,2-diyl bis(6-aminohexanoate) sulphate salt

A 250 mL flanged glass reactor with overhead stirrer, thermometer and cooler was loaded with ε-caprolactam (89,9 g, 0.79 mol) and ethylene glycol (24,6 g, 0.4 mol). The mixture was heated to 80 deg C. Then, sulphuric acid (95% in water 55,94 g, 0.54 mol) was added and the mixture was heated to 140 deg C. After 8 hours, the mixture was cooled to room temperature and analysed by NMR. The product was obtained as a viscous liquid. The product contained ethane-1,2-diyl bis(6-aminohexanoate) salt in a high yield of more than 80% and a small amount of hydroxyethyl-6-aminohexanoate sulphate salt.

### Alternative compounds:

### Compound N2 - Preparation of diesterdiamine from triethyleneglycol and caprolactam

Caprolactam (90.2 g, 797 mmol) and triethylene glycol (59.8 g, 399 mmol) were charged in a 500 mL flanged glass reactor and heated to 60 °C (externally measured temperature) using mechanical stirring, under a stream of nitrogen. Sulfuric acid (60 g, 578 g) was added over 25 mins and the temperature was then increased to 135 °C and the reaction was stopped after approximately 13 h. The product was isolated and analyzed by ¹H NMR. Approximately 50% degree of substitution was established.

### Compound N3 - Preparation of diesterdiamine from poly-THF and caprolactam

Caprolactam (16.9 g, 149 mmol) and Terathane 1400 (102.6 g, 75 mmol) were charged in a 1L flanged glass reactor and heated to 60 °C (externally measured temperature) using mechanical stirring, under a stream of nitrogen. Sulfuric acid (11 g, 108 mmol) was added over 25 mins and the temperature was then increased to 135 °C and the mixture was further stirred for approximately 19 h. The product was isolated and analyzed by ¹H NMR. Approximately 60% degree of substitution was established.

### Compound N4 - Preparation of triestertriamine from glycerol and caprolactam

Caprolactam (212 g, 1880 mmol) and glycerol (57.6 g, 625 mmol) were charged in a 500 mL flanged glass reactor and heated to 60 °C (externally measured) using mechanical stirring, under a stream of nitrogen. Sulfuric acid (118 g, 1100 mmol) was added over 45 mins and the temperature was then increased to 135 °C and the mixture was further stirred for approximately 14 h. The product was isolated and analyzed by ¹H NMR. 60% degree of substitution to a mixture of mono/di/tri substituted products was established.

### Compound N5 - Preparation of diesterdiamine from ethylene glycol and 2-pyrrolidinone

2-pyrrolidinone (93.7 g, 1100 mmol) and ethylene glycol (34.5 g, 556 mmol) were charged in a 1L flanged glass reactor and heated to 60 °C (externally measured temperature) using mechanical stirring, under a stream of nitrogen. Sulfuric acid (82 g, 790 mmol) was added over 45 mins and the temperature was then increased to 135 °C and the mixture was further stirred for approximately 25 h. The product was isolated and analyzed by ¹H NMR. Approximately 80% degree of substitution was established

### Example 1 (comparison)

14.23 g of DCPMI and 7.14 g Mefenpyr-diethyl were dissolved at 50°C in 21.4 g of Solvesso® 200 ND. 1.2 g of Desmodur® 44V20L were added. This mixture was added to a solution of 1.51 g Reax 88B, 0.05 g SAG 1572, 0.18 g of Kathon® CG/ICP in 53.51 g of water. The mixture was dispersed with a disperser at 15 000 rpm for 10 minutes. 0.39 g of hexamethlyendiame was dissolved in 0.39 g water and added. The resulting reaction mixture is heated up to 70°C within one hour and kept at 70°C with gentle stirring for a further 4 hours. After subsequent cooling to room temperature, 0.2 g of a 30% aqueous ammonia solution is added. The mixture is thickened with 0.2 g of Rhodopol® G and 0.4 g citric acid were added. In this way, a microcapsule formulation having a DCPMI content of 150 g/l and 75 g/L Mefenpyr-deithyl with a particle size of 12 µm (d90) is obtained. In the chemical analysis the free, unencapsulated amount of active ingredient was determined < 0.05% (absolute value), thus all active ingredient was encapsulated. The determination of the total amount corresponded to 150 g/L respectively 75 g/L.

### Example 2 (invention)

14.23 g of DCPMI and 7.14 g Mefenpyr-diethyl were dissolved at 50°C in 21.4 g of Solvesso® 200 ND. 1.2 g of Desmodur® 44V20L were added. This mixture was added to a solution of 1.51 g Reax 88B, 0.05 g SAG 1572, 0.18 g of Kathon® CG/ICP in 51.17 g of water. The mixture was dispersed with a disperser at 15 000 rpm for 10 minutes. 1.56 g of compound N1 was dissolved in 1.56 g water and added. The resulting reaction mixture is heated up to 70°C within one hour and kept at 70°C with gentle stirring for a further 4 hours. After subsequent cooling to room temperature, 0.2 g of a 30% aqueous ammonia solution is added. The mixture is thickened with 0.2 g of Rhodopol® G and 0.4 g citric acid were added. In this way, a microcapsule formulation having a DCPMI content of 150 g/l and 75 g/L Mefenpyr-deithyl with a particle size of 12 µm (d90) is obtained. In the chemical analysis the free, unencapsulated amount of active ingredient was determined < 0.05% (absolute value), thus all active ingredient was encapsulated. The determination of the total amount corresponded to 150 g/L respectively 75 g/L.

### Example 3 (invention)

7.35 g of Deltamethrin was dissolved at 45°Cin 35.9 g of Solvesso® 200 ND. 0.85 g of Desmodur® 44V20L were added. This mixture was added to a solution of 0.43 g Borresperse NA, 0.02 g SAG 1572, 0.18 g of Kathon® CG/ICP in 44.63 g of water. The mixture was dispersed with a disperser at 4 000 rpm. 1.43 g of compound N1 was dissolved in 1.43 g water and added. The resulting reaction mixture is heated up to 70°C within one hour and kept at 70°C with gentle stirring for a further 4 hours. After subsequent cooling to room temperature, the mixture is thickened with an aqueous solution containing 0.2 g of Rhodopol® G. In this way, a microcapsule formulation having a Deltamethrin content of 75 g/L with a particle size of 29 µm (d90) is obtained.

**Table I: Composition of capsule suspension concentrates**

| **Component** | | | | |
|---|---|---|---|---|
| | | **1** | **2** | **3** |
| **S** | Mefenpyr-diethyl | 7.14 | 7.14 | |
| **S** | Deltamethrin | | | 7.35 |
| **C** | DCPMI | 14.23 | 14.23 | |
| **A** | Desmodur 44V20L | 1.2 | 1.2 | 0.85 |
| **B** | Hexamethlyene diamine | 0.39 | | |
| **B** | Compound N1 | | 1.56 | 1.43 |
| **F** | Reax 88B | 1.51 | 1.51 | |
| **F** | Borresperse NA | | | 0.43 |
| **G** | SAG 1572 | 0.05 | 0.05 | 0.02 |
| **G** | Kathon DG/ICP | 0.18 | 0.18 | 0.18 |
| **Water** | | add to 100 | add to 100 | add to 100 |
| **Solvesso® 200 ND** | | 21.4 | 21.4 | 35.9 |

### Determination of the relative volatility of the active ingredient

A spray liquor (0.5 g of active ingredient/l) is placed onto three Teflon membranes in each case in a glass box open at the top in a laboratory fume hood under a constant air flow of 1.6 m/s at 22°C and 60% relative air humidity. The residue on the Teflon membranes is determined by HPLC after drying after 0, 24 and 72 h. The volatility is based on the 0 h value.

**Table 2: Determination of volatility; the amount of active ingredient is the content of DCPMI in % by weight.**

| **Example** | **Relative volatility in % after 24 h** | **Relative volatility in % after 72 h** |
|---|---|---|
| 1 | 98 | 90 |
| 2 | 98 | 97 |

The results show that both materials give a good reduction of volatility and the inventive capsule material has no disadvantage over the comparative state of the art capsule in the market. Thus there is no drawback in using ester-containing, biodegradable shell materials for the encapsulation process. The inventive capsule gives even better control of volatility.

### Determination of bioavailability by apple cuticle penetration

A spray liquor (0.5 g of active ingredient/l) is applied to three apple cuticles in each case. The amount of active ingredient in the cuticle is measured; determined by HPLC after drying after 0, 24 and 72 h.

**Table 3: Penetration of DCPMI through the apple cuticle, % by weight**

| **Example** | **Cuticle penetration 24 h in %** |
|---|---|
| 1 | 6 |
| 2 | 5 |

The bioavailability of the inventive example is on the same level as the comparison. Thus there is no drawback in using ester-containing, biodegradable shell materials for the encapsulation process. The low biovailabilty for leave take up is known for this active as the mode of action is working via soil uptake of the ingredient. This test was chosen as relative, easy to use comparative test as there is no fast screening test for soil uptake of active ingredients available.

### Measurement of biodegradability:

For the measurement of biodegradability the CS formulations was investigated.

### Hydrolysis test:

The capsule suspension concentrates was stored at accelerated storage conditions for 2 weeks at 80°C. For CS formulations the increase of free unencapsulated active ingredient was measurement as benchmark for a hydrolysis and thus degradation of the shell material.

**Table 4: Hydrolysis**

| **Example** | **Fresh sample** | **Stored 2 weeks at 80°C** |
|---|---|---|
| 1 - unencapsulated DCPMI | < 0.06% | 0.13 |
| 2 - unencapsulated DCPMI | 0.13% | 0.4 |

In the case of sample 2, the unencapsulated amount increases after 2 weeks at 80°C (pH 6) by a factor 3, whereas sample 1 only increased by a factor of 2.

**Table 5: Hydrolysis of pH adjusted samples to pH 9**

| **Example** | **pH value initial** | **Ph value after 2 weeks at 80°C** |
|---|---|---|
| 1 | 9 | 8.4 |
| 2 | 9 | 5.8 |

In the case of sample 2 the pH decreases after 2 weeks at 80°C, whereas sample 1 only slightly decrease. The formation of free acid is a proof of formation of free acid from the ester thus showing increased hydrolysis of the polymer and thus degradation.

## Claims

1. A microcapsule comprising a polymeric shell, wherein the polymeric shell comprises a polymer with at least one monomer being amine-functional esters of Formula IV, 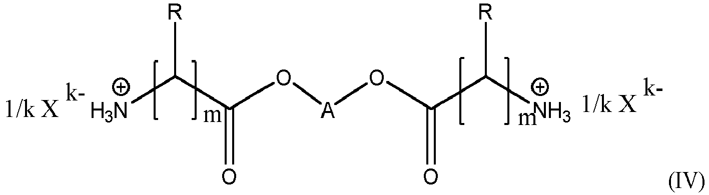
wherein k is a value of 1 to 3, and
wherein each R independently is is hydrogen or a C1-C4 alkyl group, or CH₂CH₂COOH, or CH₂COOH, or (CH₂)₄HN₂, and
wherein A is a carbon chain with 2 to 36 carbon atoms that can be aliphatic (linear or branched, saturated or unsaturated) or aromatic, or CH₂CH(OH)CH₂, CH₂C(CH₂OH)₂CH₂, CH₂C(CH₂ H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids as defined above,
and wherein each m is m is an integer of 1-8,
and X is an anion derivable from deprotonating a Bronsted-Lowry acid.

2. Microcapsule according to claim 1 for use in agrochemical formulations.

3. Microcapsule according to claim any of claims 1 or 2, wherein the polymeric shell comprises in polymerized form the monomers a) and b,) wherein
a) is at least one polyisocyanate containing at least 2 isocyanate groups, and
b) is at least an ester group containing compound of Formula IV.

4. Microcapsule according to one or more of claims 1 to 3, wherein the polymeric shell comprises in polymerized form the monomers a) and b), wherein
a) is at least one polyisocyanate containing at least 2 isocyanate groups, and
b) is at least an ester group containing compound of Formula IV and optionally further isocyanate reactive compounds b) different from IV.

5. Microcapsule according to one or more of claims 1 to 4 **characterized in that** it comprises a polymeric shell and a core, wherein the core comprises at least on active ingredient.

6. Microcapsule according to one or more of claims 1 to 5 **characterized in that** the polymeric shell is biodegradable under environmental conditions.

7. A microcapsule formulation comprising a microcapsule according to one or more of claims 1 to 6, **characterized in that** it comprises as components
a): at least one isocyanate
b): at least one compound of Formula IV 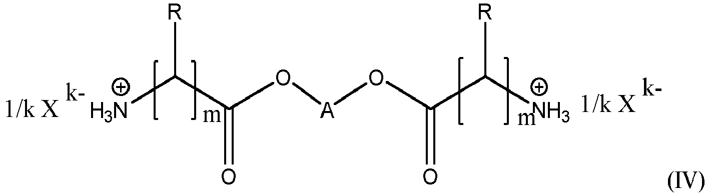
wherein k is a value of 1 to 3, and
wherein each R independently is is hydrogen or a C1-C4 alkyl group, or CH₂CH₂COOH, or CH₂COOH, or (CH₂)₄HN₂, and
wherein A is is a carbon chain with 2 to 36 carbon atoms that can be aliphatic (linear or branched, saturated or unsaturated) or aromatic, or CH₂CH(OH)CH₂, CH₂C(CH₂OH)₂CH₂, CH₂C(CH₂ H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids as defined above,
and wherein each m is m is an integer of 1-8,
and X is an anion derivable from deprotonating a Bronsted-Lowry acid,
c): at least one active ingredient,
d): optionally a water immiscible solvent,
e): optionally at least one emulsifier and/or dispersant,
f): at least one protective colloid,
g): optionally further additives,
i) water to volume
wherein components a) and b) are forming the shell of the microcapsule.

8. Microcapsule formulation according to claim 7 **characterized in that** the microcapsules have a median particle size d50 which is generally between 1 and 50 µm.

9. Microcapsule formulation according to claim 7 or 8 **characterized in that** at least one component selected from d), e) and g) is mandatory.

10. Microcapsule formulation according to one or more of claims 7 to 9 **characterized in that** the active ingredient is selected from the group of herbicides, safeners, fungicides, insecticides and biologics.

11. Microcapsule formulation according to one or more of claims 7 to 10 **characterized in that** the proportion of a) and b) is between 0.1% and 8% by weight,
the proportion of active agrochemical ingredient c) is between 1% and 50% by weight,
the proportion of organic solvent d) is between 0% and 60% by weight,
the proportion of protective colloids f) is between 0.1% and 5% by weight, and
and the proportion of additives g) is between 0.1% and 15% by weight.

12. Microcapsule formulation according to one or more of claims 7 to 10 **characterized in that**
the proportion of a) and b) is between 0.3% and 2.5% by weight,
the proportion of active agrochemical ingredient c) is between 10% and 20% by weight,
the proportion of organic solvent d) is between 0% and 40% by weight,
the proportion of protective colloids f) is between 0.3% and 1.5% by weight,
and the proportion of additives g) is between 0.4% and 3% by weight.

13. Use of a microcapsule formulation for application of agrochemical active ingredients to plants, parts of plants, seeds and their habitat.

14. Process for the production of microcaspsules, **characterized in that** at least one monomer being amine-functional esters of Formula IV, 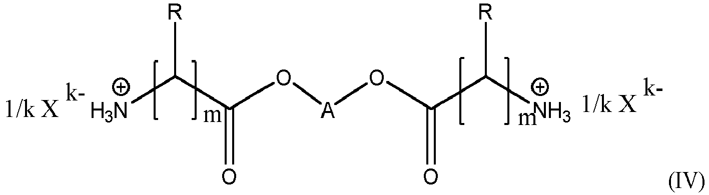
wherein k is a value of 1 to 3, and
wherein each R independently is is hydrogen or a C1-C4 alkyl group, or CH₂CH₂COOH, or CH₂COOH, or (CH₂)₄HN₂, and
wherein A is a carbon chain with 2 to 36 carbon atoms that can be aliphatic (linear or branched, saturated or unsaturated) or aromatic, or CH₂CH(OH)CH₂, CH₂C(CH₂OH)₂CH₂, CH₂C(CH₂ H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids as defined above,
and wherein each m is m is an integer of 1-8, and X is an anion derivable from deprotonating a Bronsted-Lowry acid,
is reacted with at least one polyisocyanate containing at least 2 isocyanate groups.

15. Microcaspsules produced by a process, **characterized in that** at least one monomer being amine-functional esters of Formula IV, 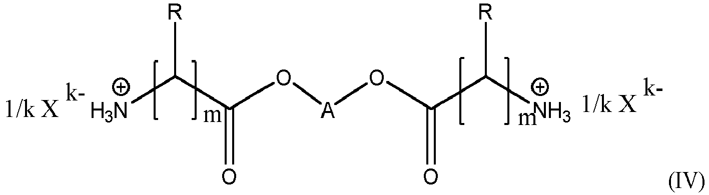
wherein k is a value of 1 to 3, and
wherein each R independently is is hydrogen or a C1-C4 alkyl group, or CH₂CH₂COOH, or CH₂COOH, or (CH₂)₄HN₂, and
wherein A is a carbon chain with 2 to 36 carbon atoms that can be aliphatic (linear or branched, saturated or unsaturated) or aromatic, or CH₂CH(OH)CH₂, CH₂C(CH₂OH)₂CH₂, CH₂C(CH₂ H)(CH₃)CH₂, CH₂C(CH₂OH)(CH₂CH₃)CH₂, p-tetrahydrofuran, erythritol or an ester of di- or tricarboxylic acids with ethylene or propylene glycol, and wherein A can optionally be alkoxylated with one or more alkylene oxide units or reacted with one or more hydroxy carboxylic acids as defined above,
and wherein each m is m is an integer of 1-8, and X is an anion derivable from deprotonating a Bronsted-Lowry acid,
is reacted with at least one polyisocyanate containing at least 2 isocyanate groups.
